# EUROPEAN PATENT APPLICATION

(11) **EP 4 757 017 A1**
(43) Date of publication of application: **10.06.2026**
(21) Application number: 23953645.1
(22) Date of filing: 28.09.2023
(51) Int. Cl.: H01M 50/176, H01M 50/553, H01M 50/188

(54) **BATTERY CELL, BATTERY, AND ELECTRIC DEVICE**

(71) Applicant: Contemporary Amperex Technology Co., Limited, Ningde, Fujian 352100 (CN)
(72) Inventor: SU, Huasheng, Ningde, Fujian 352100 (CN); YANG, Rui, Ningde, Fujian 352100 (CN); CAI, Runchen, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2023/122545
(87) International publication number: WO 2025/065496

(57) **Abstract**

The present application provides a battery cell, a battery, and an electric device, and belong to the technical field of batteries. The battery cell comprises a housing, an electrode assembly, and electrode terminal. The housing is provided with a wall portion, and an installation hole is formed on the wall portion. The electrode assembly is accommodated within the housing. The electrode terminal is arranged as passing through the installation hole; the electrode terminal comprises a first terminal portion and a second terminal portion in a split arrangement; the first terminal portion and the second terminal portion are arranged in the thickness direction of the wall portion and are interconnected; at least part of the first terminal portion is located on the side of the wall portion facing the electrode assembly and is electrically connected to the electrode assembly; at least part of the second terminal portion is located on the side of the wall portion away from the electrode assembly, and the first terminal portion and the second terminal portion are configured as cooperatively holding the wall portion. The present battery cell does not need a riveting process to assemble a terminal onto the wall portion, and the sizes of the first terminal portion and the second terminal portion can be increased according to practical requirements, so as to improve the stability the electrode terminal assembled onto the wall portion.

## Description

### TECHNICAL FIELD

The present application relates to the field of battery technologies, and specifically to a battery cell, a battery, and an electric device.

### BACKGROUND

In recent years, new energy vehicles have experienced leapfrog development. In the field of electric vehicles, power batteries serve as the power source for electric vehicles and play an irreplaceable important role. With the vigorous promotion of new energy vehicles, the demand for power battery products has been increasing. As core components of new energy vehicles, batteries have high requirements in terms of usage safety and service life. A battery cell of a battery typically includes a housing and an electrode assembly accommodated in the housing, and an electrode terminal is provided on the housing. The electrode terminal is electrically connected to the electrode assembly to enable the electrical energy input to or output from of the battery cell. However, the structural stability of the electrode terminal of existing battery cells mounted on the housing is poor, making the electrode terminal at risk of detachment during use, thereby resulting in poor usage stability of the battery cell and a short service life.

### SUMMARY

Embodiments of the present application provide a battery cell, a battery, and an electric device, so as to effectively enhance the usage stability and service life of the battery cell.

In a first aspect, an embodiment of the present application provides a battery cell, including a housing, an electrode assembly, and an electrode terminal. The housing has a wall portion, the wall portion is provided with a mounting hole, and the mounting hole extends through the wall portion along a thickness direction of the wall portion. The electrode assembly is accommodated in the housing. The electrode terminal extends through the mounting hole, the electrode terminal includes a first terminal portion and a second terminal portion that are separately provided, the first terminal portion and the second terminal portion are arranged along the thickness direction of the wall portion and connected to each other, at least a part of the first terminal portion is located on a side of the wall portion facing the electrode assembly and is electrically connected to the electrode assembly, at least a part of the second terminal portion is located on a side of the wall portion facing away from the electrode assembly, and the first terminal portion and the second terminal portion are configured to cooperatively clamp the wall portion.

In the above technical solution, the electrode terminal is provided with the first terminal portion and the second terminal portion that are arranged along the thickness direction of the wall portion and connected to each other, at least a part of the first terminal portion is located on the side of the wall portion facing the electrode assembly, and at least a part of the second terminal portion is located on the side of the wall portion facing away, so that the first terminal portion and the second terminal portion can cooperatively clamp the wall portion, thereby enabling the electrode terminal to be assembled onto the wall portion to restrict the electrode terminal from detaching from the wall portion along the thickness direction of the wall portion. A battery cell with this structure does not require the electrode terminals to be assembled onto the wall portion by a riveting process, and radial dimensions of the separately provided first terminal portion and second terminal portion can be increased according to actual needs, which is beneficial to improving the structural strength of the first terminal portion and the second terminal portion, thereby effectively improving the structural strength and structural stability of the electrode terminal assembled on the wall portion, reducing the risk of detachment of the electrode terminal during use, and further helping to improve the usage stability and service life of the battery cell.

In some embodiments, the first terminal portion includes a first limiting portion and a first protrusion; along the thickness direction of the wall portion, the first limiting portion is located on the side of the wall portion facing the electrode assembly, and the first limiting portion is configured to cooperate with the second terminal portion to clamp the wall portion; and the first protrusion is protrudingly formed on a side of the first limiting portion facing away from the electrode assembly, and the first protrusion is disposed in the mounting hole along the thickness direction of the wall portion and connected to the second terminal portion.

In the above technical solution, the first terminal portion is provided with the first limiting portion and the first protrusion, and the first limiting portion is located on the side of the wall portion facing the electrode assembly, so that the first limiting portion to cooperate with the second terminal portion to clamp the wall portion. The first protrusion is protrudingly formed on the side of the first limiting portion facing away from the electrode assembly and disposed in the mounting hole, so that the first terminal portion can be connected to the second terminal portion through the first protrusion disposed in the mounting hole, enabling the first terminal portion and the second terminal portion to be arranged along the thickness direction of the wall portion and connected to each other, which is thereby beneficial to reducing the difficulty of connecting the first terminal portion and the second terminal portion.

In some embodiments, the second terminal portion includes a second limiting portion and a second protrusion; along the thickness direction of the wall portion, the second limiting portion is located on the side of the wall portion facing away from the electrode assembly, at least a part of the wall portion is located between the second limiting portion and the first limiting portion, and the second limiting portion is configured to cooperate with the first limiting portion to clamp the wall portion; and the second protrusion is protrudingly formed on a side of the second limiting portion facing the electrode assembly, and the second protrusion is connected to the first protrusion.

In the above technical solution, the second terminal portion is provided with the second limiting portion and the second protrusion, and the second limiting portion is located on the side of the wall portion facing away from the electrode assembly, so that the second limiting portion can cooperate with the first limiting portion to clamp the wall portion. The second protrusion is protrudingly formed on the side of the second limiting portion facing the electrode assembly, thereby facilitating mutual connection between the first terminal portion and the second terminal portion through a structure in which the first protrusion and the second protrusion are connected to each other. This structure is simple and convenient for assembly, and is further beneficial to optimizing the size of the first protrusion protruding from the first limiting portion to reduce the processing difficulty of the first terminal portion.

In some embodiments, along the thickness direction of the wall portion, a first groove is formed on a side of the first terminal portion facing the electrode assembly and at a position corresponding to the first protrusion.

In the above technical solution, by forming the first groove on the side of the first terminal portion facing the electrode assembly, in a region corresponding to the first protrusion, the first terminal portion is a structure that can be formed by stamping, so that the first protrusion and the first groove are respectively formed on two sides of the first terminal portion, which is beneficial to reducing the manufacturing difficulty of the first terminal portion. In addition, by providing the first groove on the first terminal portion, the thickness of a region of the first terminal portion at which the first protrusion is provided can be reduced, thereby reducing the difficulty of mutual assembly between the first protrusion and the second terminal portion.

In some embodiments, the first protrusion and the second terminal portion are connected by welding to form a first weld mark, and at least a part of the first weld mark is formed on a bottom surface of the first groove.

In the above technical solution, by configuring the first protrusion and the second terminal portion to be welded to each other, and forming at least a part of the first weld mark, created by the welding between the first protrusion and the second terminal portion, on the bottom surface of the first groove, the first weld mark is structured to extend into the first groove. A battery cell with this structure allows welding assembly of the first protrusion and the second terminal portion from a side of the first terminal portion provided with the first groove, so that welding connection between the first terminal portion and the second terminal portion is performed from a side of a thinned region in which the first groove is formed in the first terminal portion, thereby helping to reduce the difficulty of welding between the first terminal portion and the second terminal portion, as well as the power required for the welding.

In some embodiments, the battery cell further includes a current collecting member; where the current collecting member is disposed between the wall portion and the electrode assembly, and the current collecting member is connected to the first terminal portion and the electrode assembly to electrically connect the first terminal portion and the electrode assembly; where the current collecting member is spaced apart from the first weld mark.

In the above technical solution, the battery cell is further provided with a current collecting member through which the first terminal portion and the electrode assembly are connected to achieve electrical connection between the electrode assembly and the electrode terminal, which is beneficial to reducing the connection difficulty between the electrode assembly and the first terminal portion. In addition, by arranging the current collecting member and the first weld mark to be spaced apart, the current collecting member can be prevented from contacting the first weld mark in the thickness direction of the wall portion, thereby reducing interference of the first weld mark with the current collecting member, which is beneficial to improving the connection quality between the current collecting member and the first terminal portion.

In some embodiments, along the thickness direction of the wall portion, the first limiting portion has a first surface facing the electrode assembly, the first groove is recessed from the first surface in a direction away from the electrode assembly, and the first surface is connected to the current collecting member.

In the above technical solution, the first groove is recessed from the first surface of the first limiting portion in the direction away from the electrode assembly, so that the current collecting member is connected to the first surface of the first limiting portion provided with the first groove, such that the first weld mark formed on the bottom surface of the first groove can be spaced apart from the current collecting member in the thickness direction of the wall portion through the first groove. As a result, the current collecting member and the first weld mark are spaced apart, so that the current collecting member can be prevented from contacting the first weld mark in the thickness direction of the wall portion. Such a structure is simple and capable of reducing the connection difficulty between the current collecting member and the first terminal portion.

In some embodiments, along the thickness direction of the wall portion, a first convex portion is protrudingly formed on a side of the current collecting member facing away from the electrode assembly, the first convex portion extending into the first groove and being connected to the bottom surface of the first groove; where a first avoidance groove for providing clearance for the first weld mark is provided at an end of the first convex portion facing the bottom surface of the first groove.

In the above technical solution, by protrudingly forming the first convex portion on the side of the current collecting member facing away from the electrode assembly, the first convex portion can be fitted into the first groove of the first terminal portion and connected to the bottom surface of the first groove. The current collecting member with this structure can provide a positioning effect through the first convex portion to improve the assembly accuracy between the current collecting member and the first terminal portion, and the structure in which the first convex portion and the bottom surface of the first groove are connected to each other can reduce adverse effect on other components caused by the connection between the current collecting member and the first terminal portion. In addition, by providing the first avoidance groove for providing clearance for the first weld mark at the end of the first convex portion facing the bottom surface of the first groove, the first weld mark formed on the bottom surface of the first groove can be spaced apart from the current collecting member in the thickness direction of the wall portion through the first avoidance groove. As a result, the current collecting member and the first weld mark are spaced apart, so that the current collecting member can be prevented from contacting the first weld mark in the thickness direction of the wall portion.

In some embodiments, along the thickness direction of the wall portion, a groove depth of the first avoidance groove is H₁, satisfying 0.1 mm ≤ H₁ ≤ 0.5 mm.

In the above technical solution, by setting the groove depth of the first avoidance groove in the thickness direction of the wall portion to be greater than or equal to 0.1 mm, the clearance effect of the first avoidance groove on the first weld mark is improved, thereby alleviating interference of the first weld mark with the connection between the first convex portion of the current collecting member and the bottom surface of the first groove, which is beneficial to improving the quality of the connection between the first convex portion and the bottom surface of the first groove. By setting the groove depth of the first avoidance groove in the thickness direction of the wall portion to be less than or equal to 0.5 mm, excessive waste of the first avoidance groove is reduced, which can improve the structural strength of the first convex portion to enhance connection stability between the first convex portion and the bottom surface of the first groove and reduce the processing difficulty of the first avoidance groove to improve the processing efficiency of the current collecting member.

In some embodiments, along the thickness direction of the wall portion, a first convex portion is protrudingly formed on a side of the current collecting member facing away from the electrode assembly, the first convex portion extending into the first groove and being connected to the bottom surface of the first groove; where the first weld mark surrounds the outer side of the first convex portion.

In the above technical solution, by protrudingly forming the first convex portion on the side of the current collecting member facing away from the electrode assembly, the first convex portion can be fitted into the first groove of the first terminal portion and connected to the bottom surface of the first groove. The current collecting member with this structure can provide a positioning effect through the first convex portion to improve the assembly accuracy between the current collecting member and the first terminal portion, and the structure in which the first convex portion and the bottom surface of the first groove are connected to each other can reduce adverse effect on other components caused by the connection between the current collecting member and the first terminal portion. In addition, by configuring the first weld mark to surround the outer side of the first convex portion, the first weld mark formed on the bottom surface of the first groove can be spaced apart from the current collecting member, thereby preventing the current collecting member from contacting the first weld mark in the thickness direction of the wall portion.

In some embodiments, along the thickness direction of the wall portion, a second groove is formed on a side of the current collecting member facing the electrode assembly and at a position corresponding to the first convex portion.

In the above technical solution, by forming the second groove on the side of the current collecting member facing the electrode assembly, in a region corresponding to the first convex portion, the current collecting member is a structure that can be formed by stamping, so that the first convex portion and the second groove are respectively formed on two sides of the current collecting member, which is beneficial to reducing the manufacturing difficulty of the current collecting member.

In some embodiments, the second terminal portion includes a second limiting portion and a second protrusion; along the thickness direction of the wall portion, the second limiting portion is located on the side of the wall portion facing away from the electrode assembly, and the second limiting portion is configured to cooperate with the first terminal portion to clamp the wall portion; and the second protrusion is protrudingly formed on a side of the second limiting portion facing the electrode assembly, and the second protrusion is disposed in the mounting hole along the thickness direction of the wall portion and connected to the first terminal portion.

In the above technical solution, the second terminal portion is provided with the second limiting portion and the second protrusion, and the second limiting portion is located on the side of the wall portion facing away from the electrode assembly, so that the second limiting portion can cooperate with the first terminal portion to clamp the wall portion. The second protrusion is protrudingly formed on the side of the second limiting portion facing the electrode assembly and disposed in the mounting hole, so that the second terminal portion can be connected to the first terminal portion through the second protrusion disposed in the mounting hole, enabling the first terminal portion and the second terminal portion to be arranged along the thickness direction of the wall portion and connected to each other, which is beneficial to reducing the difficulty of connecting the first terminal portion and the second terminal portion.

In some embodiments, along the thickness direction of the wall portion, the first terminal portion is entirely located on the side of the wall portion facing the electrode assembly.

In the above technical solution, by arranging the first terminal portion to be entirely located on the side of the wall portion facing the electrode assembly, assembly of the first terminal portion is facilitated, and no protruding structure to be fitted into the mounting hole is required to be provided on the first terminal portion, which is beneficial to reducing the processing difficulty of the first terminal portion.

In some embodiments, along the thickness direction of the wall portion, the first terminal portion has a second surface facing away from the electrode assembly, and the second surface is connected to the second protrusion.

In the above technical solution, by connecting the second surface of the first terminal portion facing away from the electrode assembly to the second protrusion, the second protrusion forms a structure connected to a surface on the side of the first terminal portion facing away from the electrode assembly. This structure is simple and convenient for assembly, and no protruding structure to be fitted into the mounting hole is required to be provided on the first terminal portion, which is beneficial to reducing the processing difficulty of the first terminal portion.

In some embodiments, the second surface is a continuous planar surface and is perpendicular to the thickness direction of the wall portion.

In the above technical solution, by configuring the second surface as a continuous planar structure perpendicular to the thickness direction of the wall portion, the connection between the second protrusion of the second terminal portion and the first terminal portion is facilitated, thereby improving the connection quality between the second terminal portion and the first terminal portion.

In some embodiments, the electrode assembly has a tab, and along the thickness direction of the wall portion, the tab is connected to a side of the first terminal portion facing the electrode assembly to electrically connect the electrode assembly and the first terminal portion.

In the above technical solution, since the second surface of the first terminal portion facing away from the electrode assembly is a planar surface, the first terminal portion can be configured as a plate-like structure, enabling the tab of the electrode assembly to be directly connected to the side of the first terminal portion facing the electrode assembly without the need for the current collecting member, which is beneficial to optimizing the production process and cycle time of the battery cell, thereby improving the production efficiency of the battery cell and reducing production cost of the battery cell.

In some embodiments, along the thickness direction of the wall portion, the first terminal portion has a third surface facing the electrode assembly, and the third surface is provided with a third groove; where the second protrusion and the second surface are connected by welding to form a first weld mark, and at least a part of the first weld mark is formed on a bottom surface of the third groove.

In the above technical solution, by providing the third groove on the third surface of the first terminal portion facing the electrode assembly, and forming at least a part of the first weld mark, created by welding between the second protrusion and the second surface, on the bottom surface of the third groove, the first weld mark is structured to extend into the third groove. A battery cell with this structure allows welding assembly of the second protrusion and the second surface of the first terminal portion from a side of the first terminal portion provided with the third groove, so that welding connection between the first terminal portion and the second terminal portion is performed from a side of a thinned region in which the third groove is formed in the first terminal portion, and there is no need to extend through the second limiting portion and the second protrusion from a side of the second terminal portion facing away from the electrode assembly before welding to the first terminal portion, which is beneficial to reducing the difficulty of welding between the first terminal portion and the second terminal portion, as well as the power required for the welding.

In some embodiments, the battery cell further includes a current collecting member; where the current collecting member is disposed between the wall portion and the electrode assembly, and the current collecting member is connected to the first terminal portion and the electrode assembly to electrically connect the first terminal portion and the electrode assembly; where along the thickness direction of the wall portion, the current collecting member is connected to the third surface, and the current collecting member is spaced apart from the bottom surface of the third groove.

In the above technical solution, the battery cell is further provided with a current collecting member through which the first terminal portion and the electrode assembly are connected to achieve electrical connection between the electrode assembly and the electrode terminal, which is beneficial to reducing the connection difficulty between the electrode assembly and the first terminal portion. In addition, by connecting the current collecting member to the third surface of the first terminal portion provided with the third groove, the first weld mark formed on the bottom surface of the third groove can be spaced apart from the current collecting member in the thickness direction of the wall portion through the third groove, so that the third groove further serves to provide clearance for the current collecting member relative to the first weld mark. As a result, the current collecting member and the first weld mark are spaced apart in the thickness direction of the wall portion, so that the current collecting member can be prevented from contacting the first weld mark in the thickness direction of the wall portion, thereby reducing interference of the first weld mark with the current collecting member, which is beneficial to improving the connection quality between the current collecting member and the first terminal portion.

In some embodiments, along the thickness direction of the wall portion, a groove depth of the third groove is H₂, satisfying 0.1 mm ≤ H₂ ≤ 0.5 mm.

In the above technical solution, by setting the groove depth of the third groove in the thickness direction of the wall portion to be greater than or equal to 0.1 mm, the clearance effect of the third groove on the first weld mark is improved, thereby alleviating interference of the first weld mark with the connection between the current collecting member and the third surface of the first terminal portion, which is beneficial to improving the connection quality between the current collecting member and the first terminal portion. By setting the groove depth of the third groove in the thickness direction of the wall portion to be less than or equal to 0.5 mm, excessive waste of the third groove is reduced, which can improve the overall structural strength of the first terminal portion and reduce the processing difficulty of the third groove to improve processing efficiency of the first terminal portion.

In some embodiments, along the thickness direction of the wall portion, the first terminal portion has a second surface facing away from the electrode assembly, the second surface is provided with a fourth groove, and the second protrusion is fitted into the fourth groove and connected to a bottom surface of the fourth groove.

In the above technical solution, by providing the fourth groove on the second surface of the first terminal portion facing away from the electrode assembly, with the second protrusion fitted into the fourth groove and connected to the bottom surface of the fourth groove, this structure provides a positioning effect for the assembly of the first terminal portion and the second terminal portion, which is beneficial to improving the assembly accuracy between the first terminal portion and the second terminal portion and reducing the assembly difficulty therebetween.

In some embodiments, the second protrusion and the bottom surface of the fourth groove are connected by welding to form a first weld mark, and the first weld mark extends to a side of the first terminal portion facing the electrode assembly.

In the above technical solution, the second protrusion and the bottom surface of the fourth groove are connected by welding, and the first weld mark formed by welding connection between the second protrusion and the bottom surface of the fourth groove extends to the side of the first terminal portion facing the electrode assembly. A battery cell with this structure allows welding assembly of the second protrusion and the bottom surface of the fourth groove from the side of the first terminal portion facing the electrode assembly, and there is no need to extend through the second limiting portion and the second protrusion from a side of the second terminal portion facing away from the electrode assembly before welding to the first terminal portion, which is beneficial to reducing the difficulty of welding between the first terminal portion and the second terminal portion, as well as the power required for the welding.

In some embodiments, the battery cell further includes a current collecting member; the current collecting member is disposed between the wall portion and the electrode assembly, and the current collecting member is connected to the first terminal portion and the electrode assembly to electrically connect the first terminal portion and the electrode assembly; where along the thickness direction of the wall portion, the first terminal portion has a third surface facing the electrode assembly, the current collecting member is connected to the third surface, and a second avoidance groove for providing clearance for the first weld mark is provided on a side of the current collecting member facing away from the electrode assembly.

In the above technical solution, the first terminal portion and the electrode assembly are connected through the current collecting member to achieve electrical connection between the electrode assembly and the electrode terminal, which is beneficial to reducing the connection difficulty between the electrode assembly and the first terminal portion. In addition, by connecting the current collecting member to the third surface of the first terminal portion facing the electrode assembly, and providing the second avoidance groove on the side of the current collecting member facing away from the electrode assembly for providing clearance for the first weld mark, the first weld mark formed on the side of the first terminal portion facing the electrode assembly can be spaced apart from the current collecting member in the thickness direction of the wall portion through the second avoidance groove. As a result, the current collecting member and the first weld mark do not contact each other in the thickness direction of the wall portion, thereby reducing interference of the first weld mark with the current collecting member, which is beneficial to improving the connection quality between the current collecting member and the third surface of the first terminal portion.

In some embodiments, a third protrusion is protrudingly formed on the third surface, and the first weld mark extends to an end of the third protrusion facing the electrode assembly; where along the thickness direction of the wall portion, the third protrusion is fitted into the second avoidance groove, and the third protrusion is spaced apart from a bottom surface of the second avoidance groove.

In the above technical solution, by protrudingly forming the third protrusion fitted into the second avoidance groove of the current collecting member on the third surface of the first terminal portion, with the third protrusion spaced apart from the bottom surface of the second avoidance groove in the thickness direction of the wall portion, cooperation between the third protrusion and the second avoidance groove provides a positioning effect for the current collecting member and the first terminal portion, while the first weld mark extending onto the third protrusion is spaced apart from the current collecting member in the thickness direction of the wall portion, which is beneficial to improving the assembly accuracy between the current collecting member and the first terminal portion.

In some embodiments, along the thickness direction of the wall portion, a distance between the third protrusion and the bottom surface of the second avoidance groove is H₃, satisfying 0.1 mm ≤ H₃ ≤ 0.5 mm.

In the above technical solution, by setting the distance between the third protrusion and the bottom surface of the second avoidance groove to be greater than or equal to 0.1 mm, the clearance effect of the second avoidance groove on the first weld mark is improved, thereby alleviating interference of the first weld mark with the connection between the current collecting member and the first terminal portion, which is beneficial to improving the connection quality between the current collecting member and the first terminal portion. By setting the distance between the third protrusion and the bottom surface of the second avoidance groove to be less than or equal to 0.5 mm, space occupied by the current collecting member and the first terminal portion in the thickness direction of the wall portion can be optimized, and excessive waste of the second avoidance groove can be reduced, which can improve structural strength of the current collecting member and reduce the processing difficulty of the second avoidance groove to improve the processing efficiency of the current collecting member.

In some embodiments, along the thickness direction of the wall portion, a second convex portion is formed on a side of the current collecting member facing the electrode assembly and at a position corresponding to the second avoidance groove.

In the above technical solution, by forming the second convex portion on the side of the current collecting member facing the electrode assembly, in a region corresponding to the second avoidance groove, the current collecting member is a structure that can be formed by stamping, so that the second avoidance groove and the second convex portion are respectively formed on two sides of the current collecting member, which is beneficial to reducing the manufacturing difficulty of the current collecting member.

In some embodiments, the first terminal portion and the second terminal portion are connected by welding.

In the above technical solution, by configuring the first terminal portion and the second terminal portion to be welded to each other, it is beneficial to improving the connection strength between the first terminal portion and the second terminal portion to improve the structural stability of the electrode terminal assembled on the wall portion. In addition, the structure in which the first terminal portion and the second terminal portion are connected by welding can replace assembling the electrode terminal on the wall portion through a riveting process, thereby allowing increase of radial dimensions of the separately provided first terminal portion and second terminal portion according to actual needs, which is beneficial to improving the structural strength of the first terminal portion and the second terminal portion.

In some embodiments, the first terminal portion has a first limiting portion, along the thickness direction of the wall portion, the first limiting portion is located on the side of the wall portion facing the electrode assembly, and the first limiting portion is configured to cooperate with the second terminal portion to clamp the wall portion to restrict the electrode terminal from detaching from the wall portion along the thickness direction of the wall portion; where the battery cell further includes a current collecting member, the current collecting member is disposed between the wall portion and the electrode assembly, and the current collecting member connects the electrode assembly and the first limiting portion.

In the above technical solution, the first terminal portion is provided with the first limiting portion, and the first limiting portion is located on the side of the wall portion facing the electrode assembly, so that the first limiting portion can cooperate with the second terminal portion to clamp the wall portion. The battery cell is further provided with the current collecting member, and electrical connection between the electrode assembly and the electrode terminal can be achieved through the current collecting member connecting the first limiting portion of the first terminal portion and the electrode assembly. With this structure, the difficulty of establishing electrical connection between the electrode assembly and the electrode terminal can be reduced, and the assembly difficulty between the current collecting member and the first terminal portion can be reduced.

In some embodiments, the first terminal portion and the second terminal portion are connected by welding, and the current collecting member is welded to the first limiting portion; where along the thickness direction of the wall portion, a thickness of the first limiting portion is greater than a thickness of a region in which the first terminal portion and the second terminal portion are connected by welding.

In the above technical solution, since the first limiting portion is located on the side of the wall portion facing the electrode assembly, setting the thickness of the first limiting portion to be greater than the thickness of the region in which the first terminal portion and the second terminal portion are connected by welding enables the first terminal portion to be a structure thickened in a region corresponding to the first limiting portion. This alleviates the phenomenon of burn-through of the first limiting portion during welding between the current collecting member and the first limiting portion, thereby reducing adverse effect on the wall portion of the battery cell or other components during welding between the current collecting member and the first limiting portion.

In some embodiments, the current collecting member and the first limiting portion are connected by welding to form a second weld mark; and the battery cell further includes a sealing member, where the sealing member is disposed between the wall portion and the electrode terminal, and at least a part of the sealing member is located within the mounting hole to seal a gap between the electrode terminal and a wall surface of the mounting hole, along the thickness direction of the wall portion, the sealing member has an abutting surface, and the abutting surface abuts against a side of the first limiting portion facing away from the electrode assembly; where a projection of the second weld mark in the thickness direction of the wall portion does not overlap with the abutting surface.

In the above technical solution, by configuring the second weld mark formed by welding connection between the current collecting member and the first limiting portion such that its projection in the thickness direction of the wall portion does not overlap with the abutting surface of the sealing member, the second weld mark and an abutting surface of the sealing member abutting against the first limiting portion are structures offset in the thickness direction of the wall portion, thereby reducing adverse effect on the sealing member during welding between the current collecting member and the first limiting portion, which is beneficial to alleviating the phenomenon of the sealing member being burned, thereby effectively improving the sealing effectiveness of the sealing member between the electrode terminal and the wall surface of the mounting hole.

In some embodiments, the current collecting member is welded to the first limiting portion; and the battery cell further includes a sealing member, where the sealing member is disposed between the wall portion and the electrode terminal, and at least a part of the sealing member is located within the mounting hole to seal a gap between the electrode terminal and a wall surface of the mounting hole; where along the thickness direction of the wall portion, the sealing member is spaced apart from the first limiting portion.

In the above technical solution, by spacing the first limiting portion and the sealing member apart in the thickness direction of the wall portion, adverse effect on the sealing member during welding between the current collecting member and the first limiting portion can be reduced, which is beneficial to alleviating the phenomenon of the sealing member being burned, thereby effectively improving the sealing effectiveness of the sealing member on the electrode terminal and the wall surface of the mounting hole.

In some embodiments, the battery cell further includes a first insulating member; and along the thickness direction of the wall portion, at least a part of the first insulating member is located between the first limiting portion and the wall portion to insulate and isolate the first limiting portion from the wall portion; where the first insulating member extends between the sealing member and the first limiting portion to separate the sealing member from the first limiting portion.

In the above technical solution, the battery cell is further provided with the first insulating member for insulating and isolating the first limiting portion from the wall portion, to reduce short circuit risk between the first limiting portion and the wall portion, and by configuring the first insulating member to extend between the sealing member and the first limiting portion, the first insulating member can separate the sealing member from the first limiting portion, so that the sealing member and the first limiting portion are respectively located on two sides of the first insulating member in the thickness direction of the wall portion, thereby further reducing the adverse effect on the sealing member during welding between the current collecting member and the first limiting portion, which is beneficial to further alleviating the phenomenon of the sealing member being burned.

In some embodiments, the current collecting member and the first limiting portion are connected by welding to form a second weld mark; and the battery cell further includes a sealing member, where the sealing member is disposed between the wall portion and the electrode terminal, at least a part of the sealing member is located within the mounting hole to seal a gap between the electrode terminal and a wall surface of the mounting hole, and along the thickness direction of the wall portion, the sealing member abuts against a side of the first limiting portion facing away from the electrode assembly; where along the thickness direction of the wall portion, a distance between the second weld mark and the sealing member is L, satisfying 0.1 mm ≤ L ≤ 1.3 mm.

In the above technical solution, by setting a distance in the thickness direction of the wall portion from the second weld mark formed by welding between the first limiting portion and the current collecting member to the sealing member to be greater than or equal to 0.1 mm, so as to reduce adverse effect on the sealing member during welding the current collecting member and the first limiting portion, it is beneficial to alleviating the phenomenon of the sealing member being burned, thereby effectively improving the sealing effectiveness of the sealing member on the electrode terminal and the wall surface of the mounting hole. By setting the distance in the thickness direction of the wall portion from the second weld mark formed by welding between the first limiting portion and the current collecting member to the sealing member to be less than or equal to 1.3 mm, the phenomenon of excessive distance between the second weld mark and the sealing member causing excessive space occupied by the second weld mark and the sealing member is reduced, which is beneficial to improving the energy density of the battery cell and reducing the assembly difficulty of the sealing member.

In some embodiments, along a direction perpendicular to the thickness direction of the wall portion, the first terminal portion and the second terminal portion do not overlap.

In the above technical solution, by arranging the first terminal portion and the second terminal portion so as not to overlap with each other in a direction perpendicular to the thickness direction of the wall portion, the first terminal portion and the second terminal portion are structures arranged along the thickness direction of the wall portion and not embedded in each other, thereby facilitating the connection between the first terminal portion and the second terminal portion, and optimizing the overall weight of the electrode terminal to improve the energy density of the battery cell.

In some embodiments, the first terminal portion has a first limiting portion, and the second terminal portion has a second limiting portion; where along the thickness direction of the wall portion, the first limiting portion is located on the side of the wall portion facing the electrode assembly, the second limiting portion is located on the side of the wall portion facing away from the electrode assembly, and the first limiting portion and the second limiting portion are configured to cooperatively clamp the wall portion.

In the above technical solution, the first terminal portion has the first limiting portion located on the side of the wall portion facing the electrode assembly, and the second terminal portion has the second limiting portion located on the side of the wall portion facing away from the electrode assembly, such that at least a part of the wall portion is located between the first limiting portion and the second limiting portion, enabling the first limiting portion and the second limiting portion to cooperatively clamp the wall portion. With this structure, the first terminal portion and the second terminal portion can cooperatively clamp the wall portion to restrict the electrode terminal from detaching from the wall portion along the thickness direction of the wall portion. Such a structure is simple and convenient for assembly.

In some embodiments, the battery cell further includes a first insulating member; and along the thickness direction of the wall portion, at least a part of the first insulating member is located between the first limiting portion and the wall portion to insulate and isolate the first limiting portion from the wall portion.

In the above technical solution, the battery cell is further provided with the first insulating member, and at least a part of the first insulating member is located between the first limiting portion and the wall portion, such that the first insulating member can insulate and isolate the first limiting portion from the wall portion, thereby reducing short circuit risk between the first limiting portion and the wall portion, which is beneficial to improving the usage reliability of the battery cell.

In some embodiments, the battery cell further includes a second insulating member; and along the thickness direction of the wall portion, at least a part of the second insulating member is located between the second limiting portion and the wall portion to insulate and isolate the second limiting portion from the wall portion.

In the above technical solution, the battery cell is further provided with the second insulating member, and at least a part of the second insulating member is located between the second limiting portion and the wall portion, such that the second insulating member can insulate and isolate the second limiting portion from the wall portion, thereby reducing short circuit risk between the second limiting portion and the wall portion, which is beneficial to improving the usage reliability of the battery cell.

In some embodiments, along the thickness direction of the wall portion, an accommodation groove is provided on a side of the wall portion facing away from the electrode assembly, the mounting hole is provided on a bottom surface of the accommodation groove, and at least a part of the second insulating member is accommodated within the accommodation groove.

In the above technical solution, by providing, on the side of the wall portion facing away from the electrode assembly, the accommodation groove configured to accommodating the second insulating member, to facilitate assembly of the second insulating member between the second limiting portion and the wall portion, the accommodating groove can provide assembly positioning for the second insulating member, which is beneficial to reducing the assembly difficulty of the second insulating member and providing a certain degree of protection for the second insulating member, to reduce occurrence of wear, damage, or the like of the second insulating member during use.

In some embodiments, the second terminal portion includes a first material layer and a second material layer that are composited with each other, the first material layer is connected to the first terminal portion, and the second material layer is used for connecting to a busbar component; where the first material layer is made of a material different from that of the second material layer, the first material layer is made of the same material as the first terminal portion, and the second material layer is made of the same material as the busbar component.

In the above technical solution, by configuring the second terminal portion to be composed of the first material layer and the second material layer that are composited with each other, with the first material layer made of the same material as the first terminal portion and the second material layer made of the same material as the busbar component, the first terminal portion can be connected to a tab of the electrode assembly with the same material, and the second material layer of the second terminal portion can be connected to the busbar component with the same material. Thus, the electrode terminal with this structure can achieve connection between the tab of the electrode assembly and the busbar component that are made of different materials, which is beneficial to improving the overcurrent effect and alleviating the quality problems caused by mutual assembly between components of different materials.

In some embodiments, the first material layer and the second material layer are stacked along the thickness direction of the wall portion, and the first material layer is located on a side of the second material layer facing the electrode assembly.

In the above technical solution, by arranging the first material layer and the second material layer of the second terminal portion to be stacked along the thickness direction of the wall portion, with the first material layer on the side of the second material layer facing the electrode assembly, the second terminal portion with this structure allows the first material layer to be disposed opposite the first terminal portion, facilitating mutual assembly between the first material layer and the first terminal portion, and facilitating composite connection between the first material layer and the second material layer, which is beneficial to reducing the difficulty of composite connection between the first material layer and the second material layer.

In some embodiments, the housing includes a casing and an end cover; where the casing has an internal accommodation cavity with an opening, the accommodation cavity is configured to accommodate the electrode assembly; and the end cover closes the opening, where the end cover is the wall portion.

In the above technical solution, by configuring the wall portion of the housing as the end cover of the housing for closing the opening of the casing, a battery cell with this structure facilitates assembly of the electrode terminal on the end cover and mutual assembly between the electrode terminal and the electrode assembly, which is beneficial to reducing the assembly difficulty of the battery cell, improving the production efficiency of the battery cell.

In some embodiments, the housing includes a casing and an end cover; where the casing includes a side wall and the wall portion that are integrally formed, the side wall is disposed around the wall portion, along the thickness direction of the wall portion, one end of the side wall is connected to the wall portion, the other end encloses to form an opening, and the side wall and the wall portion jointly define an accommodation cavity for accommodating the electrode assembly; and the end cover closes the opening.

In the above technical solution, by configuring the wall portion of the housing as a wall of the casing disposed opposite to the end cover in the thickness direction of the wall portion, a battery cell with this structure can make a region of the housing in which the electrode terminal is mounted away from the end cover, and there is no direct connection relationship between the wall portion and the end cover, thereby alleviating the phenomenon that force generated when components such as the electrode terminal pull or twist the wall portion acts on the end cover, to reduce the risk of connection failure between the end cover and the casing, which is thereby beneficial to reducing the risk of liquid leakage of the battery cell during use.

In a second aspect, an embodiment of the present application further provides a battery, including the above battery cell.

In a third aspect, an embodiment of the present application further provides an electric device, including the above battery cell, and the battery cell is used for providing electrical energy.

### BRIEF DESCRIPTION OF DRAWINGS

In order to more clearly illustrate the technical solutions of the embodiments of the present application, the drawings required in the embodiments will be briefly introduced below. It should be understood that the following drawings only show certain embodiments of the present application and therefore should not be regarded as limiting the scope. For those of ordinary skill in the art, other related drawings can be obtained based on these drawings without creative efforts.
FIG. 1 is a schematic structural diagram of a vehicle according to some embodiments of the present application;
FIG. 2 is an exploded structural diagram of a battery according to some embodiments of the present application;
FIG. 3 is a schematic structural diagram of a battery cell according to some embodiments of the present application;
FIG. 4 is an exploded structural diagram of a battery cell according to some embodiments of the present application;
FIG. 5 is a partial cross-sectional view of a battery cell according to some embodiments of the present application;
FIG. 6 is a cross-sectional view of an electrode terminal of a battery cell according to some embodiments of the present application;
FIG. 7 is a partial cross-sectional view of a battery cell according to further embodiments of the present application;
FIG. 8 is a partial cross-sectional view of a battery cell in other embodiments according to further embodiments of the present application;
FIG. 9 is a partial cross-sectional view of a battery cell according to yet further embodiments of the present application;
FIG. 10 is a cross-sectional view of an electrode terminal of a battery cell according to yet further embodiments of the present application;
FIG. 11 is a partial cross-sectional view of a battery cell according to other embodiments of the present application;
FIG. 12 is a cross-sectional view of an electrode terminal of a battery cell according to other embodiments of the present application;
FIG. 13 is a partial cross-sectional view of a battery cell according to still further embodiments of the present application;
FIG. 14 is a partial cross-sectional view of a battery cell according to yet additional embodiments of the present application;
FIG. 15 is a cross-sectional view of an electrode terminal of a battery cell in other embodiments according to some embodiments of the present application; and
FIG. 16 is an exploded structural diagram of an electrode terminal of a battery cell in other embodiments according to some embodiments of the present application.

Reference numerals: 1000. vehicle; 100. battery; 10. enclosure; 11. first enclosure body; 12. second enclosure body; 20. battery cell; 21. housing; 211. wall portion; 2111. mounting hole; 2112. accommodation groove; 212. casing; 2121. opening; 213. end cover; 22. electrode assembly; 221. tab; 23. electrode terminal; 231. first terminal portion; 2311. first limiting portion; 2311a. first surface; 2312. first protrusion; 2313. first groove; 2314. second surface; 2314a. fourth groove; 2315. third surface; 2315a. third groove; 2315b. third protrusion; 232. second terminal portion; 2321. second limiting portion; 2322. second protrusion; 233. first weld mark; 234. first material layer; 235. second material layer; 24. current collecting member; 241. first convex portion; 2411. first avoidance groove; 242. second groove; 243. second avoidance groove; 244. second convex portion; 25. first insulating member; 26. second insulating member; 27. sealing member; 271. abutting surface; 28. second weld mark; 200. controller; 300. motor; and X. thickness direction of the wall portion.

### DESCRIPTION OF EMBODIMENTS

In order to make the purposes, technical solutions, and advantages of the embodiments of the present application clearer, the technical solutions in the embodiments of the present application will be clearly described below in conjunction with the drawings in the embodiments of the present application. Apparently, the described embodiments are some the embodiments of the present application, not all of them. Based on the embodiments in the present application, all other embodiments obtained by those of ordinary skill in the art without creative efforts fall within the protection scope of the present application.

Unless otherwise defined, all technical and scientific terms used in the present application have the same meaning as commonly understood by those skilled in the technical field to which the present application belongs; the terms used in the specification of the present application are only for the purpose of describing specific embodiments and are not intended to limit the present application; the terms "including" and "having" in the specification and claims of the present application and the above description of the drawings, as well as any variations thereof, are intended to cover non-exclusive inclusion. The terms "first", "second", and the like in the specification and claims of the present application or the above drawings are used to distinguish different objects, rather than to describe a specific order or primary-secondary relationship.

Reference to "embodiment" in the present application means that a specific feature, structure, or characteristic described in conjunction with the embodiment may be included in at least one embodiment of the present application. The appearance of this phrase in various places in the specification does not necessarily refer to the same embodiment, nor is it an independent or alternative embodiment mutually exclusive with other embodiments.

In the description of the present application, it should be noted that, unless otherwise explicitly specified and limited, the terms "mounted", "connected", "connection", and "attached" should be understood in a broad sense, for example, it can be a fixed connection, a detachable connection, or an integral connection; it can be directly connected or indirectly connected through an intermediate medium, and it can be internal communication between two elements. For those of ordinary skill in the art, the specific meanings of the above terms in the present application can be understood according to specific situations.

The term "and/or" in the present application is merely an association relationship describing associated objects, indicating that there can be three relationships, for example, A and/or B can indicate: A alone, A and B together, and B alone. In addition, the character "/" in the present application generally indicates that the associated objects before and after are in an "or" relationship.

In the embodiments of the present application, the same reference numerals denote the same components, and for brevity, detailed descriptions of the same components are omitted in different embodiments. It should be understood that the thickness, length, width, and other dimensions of various components in the embodiments of the present application shown in the drawings, as well as the overall thickness, length, width, and other dimensions of an integrated device, are only exemplary descriptions and should not constitute any limitation to the present application.

"Plurality" appearing in the present application refers to two or more (including two).

In the embodiments of the present application, a battery cell may be a secondary battery, and a secondary battery refers to a battery cell that can continue to be used by activating active materials through charging after discharge.

The battery cell may be a lithium-ion battery, a sodium-ion battery, a lithium-sodium-ion battery, a lithium metal battery, a sodium metal battery, a lithium-sulfur battery, a magnesium-ion battery, a nickel-hydrogen battery, a nickel-cadmium battery, a lead-acid battery, or the like, and the embodiments of the present application is not limited thereto.

The battery cell generally includes an electrode assembly. The electrode assembly includes a positive electrode, a negative electrode, and a separator. During charging and discharging of the battery cell, active ions (for example, lithium ions) are intercalated and deintercalated back and forth between the positive electrode and the negative electrode. The separator is disposed between the positive electrode and the negative electrode, which can prevent short circuit between the positive and negative electrodes while allowing active ions to pass through.

In some embodiments, the positive electrode may be a positive electrode sheet, and the positive electrode sheet can include a positive electrode current collector and a positive electrode active material disposed on at least one surface of the positive electrode current collector.

As an example, the positive electrode current collector has two surfaces opposite in its own thickness direction, and the positive electrode active material is disposed on either or both of the two opposite surfaces of the positive electrode current collector.

As an example, the positive electrode current collector may be a metal foil or a composite current collector. For example, as the metal foil, silver-treated aluminum, silver-treated stainless steel, stainless steel, copper, aluminum, nickel, carbon electrode, carbon, nickel, titanium, or the like may be used. The composite current collector can include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the positive electrode active material can include at least one of the following materials: lithium-containing phosphate, lithium transition metal oxide, and their respective modified compounds. However, the present application is not limited to these materials, and other conventional materials that can be used as positive electrode active materials for batteries can also be used. These positive electrode active materials may be used alone or in combination of two or more. Examples of lithium-containing phosphate can include, but are not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon. Examples of lithium transition metal oxide can include, but are not limited to, at least one of lithium cobalt oxide (such as LiCoO₂), lithium nickel oxide (such as LiNiO₂), lithium manganese oxide (such as LiMnO₂, LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (such as LiNi_{0.85}Co_{0.15}Al_{0.05}O₂), and their modified compounds.

In some embodiments, the positive electrode may use foam metal. The foam metal may be foam nickel, foam copper, foam aluminum, foam alloy, or the like. When foam metal is used as the positive electrode, the surface of the foam metal may be either not provided or provided with the positive electrode active material. As an example, lithium source material, potassium metal, or sodium metal can also be filled or/and deposited in the foam metal, and the lithium source material is lithium metal and/or lithium-rich material.

In some embodiments, the negative electrode can be a negative electrode sheet, and the negative electrode sheet can include a negative electrode current collector.

As an example, the negative electrode current collector may be a metal foil, foam metal, or composite current collector. For example, as the metal foil, silver-treated aluminum or stainless steel, stainless steel, copper, aluminum, nickel, carbon electrode, nickel, titanium, or the like may be used. The foam metal may be foam nickel, foam copper, foam aluminum, foam alloy, or the like. The composite current collector can include a polymer material base layer and a metal layer. The composite current collector can be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the negative electrode sheet can include a negative electrode current collector and a negative electrode active material disposed on at least one surface of the negative electrode current collector.

As an example, the negative electrode current collector has two surfaces opposite in its own thickness direction, and the negative electrode active material is disposed on either or both of the two opposite surfaces of the negative electrode current collector.

As an example, the negative electrode active material may use negative electrode active materials known in the art for battery cells. As an example, the negative electrode active material can include at least one of the following materials: artificial graphite, natural graphite, soft carbon, hard carbon, silicon-based material, tin-based material, lithium titanate, and the like. The silicon-based material can be selected from at least one of elemental silicon, silicon oxide compound, silicon carbon composite, silicon nitrogen composite, and silicon alloy. The tin-based material may be selected from at least one of elemental tin, tin oxide compound, and tin alloy. However, the present application is not limited to these materials, and other conventional materials that can be used as negative electrode active materials for batteries may alternatively be used. These negative electrode active materials may be used alone or in combination of two or more.

In some embodiments, the material of the positive electrode current collector may be aluminum, and the material of the negative electrode current collector may be copper.

In some implementations, the electrode assembly further includes a separator, and the separator is disposed between the positive electrode and the negative electrode.

In some implementations, the separator is a separator film. The type of the separator film can be various, and any known porous structure separator film with good chemical stability and mechanical stability may be selected.

As an example, the material of the separator film can include at least one of glass fiber, non-woven fabric, polyethylene, polypropylene, and polyvinylidene fluoride. The separator film may be a single-layer film or a multi-layer composite film. When the separator film is a multi-layer composite film, materials of each layer may be the same or different. The separator may be a separate component located between the positive and negative electrodes, or may be attached to the surface of the positive and negative electrodes.

In some implementations, the separator is a solid-state electrolyte. The solid-state electrolyte is disposed between the positive electrode and the negative electrode, and serves to transmit ions and separate the positive electrode from the negative electrode.

In some implementations, the battery cell further includes an electrolyte, and the electrolyte serves to conduct ions between the positive and negative electrodes. The electrolyte may be in a liquid state, a gel state, or a solid state. The liquid-state electrolyte includes an electrolyte salt and a solvent.

In some implementations, the electrolyte salt can include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some implementations, the solvent can include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be selected from ether solvents. The ether solvent can include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a polymer as a skeleton network of the electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte can include one or more of oxide solid electrolytes (crystalline perovskite, sodium super ionic conductor, garnet, amorphous LiPON film), sulfide solid electrolytes (crystalline lithium super ionic conductor (lithium germanium phosphorus sulfur, argyrodite), amorphous sulfide), and halide solid electrolytes, nitride solid electrolytes, and hydride solid electrolytes.

As an example, the composite solid electrolyte is formed by adding an inorganic solid-state electrolyte filler into the polymer solid-state electrolyte.

In some implementations, the electrode assembly has a wound structure. The positive electrode sheet and the negative electrode sheet are wound into a wound structure.

In some implementations, the electrode assembly has a stacked structure.

As an example, a plurality of positive electrode sheets and a plurality of negative electrode sheets may be respectively provided, and the plurality of positive electrode sheets and the plurality of negative electrode sheets are alternately stacked.

As an example, a plurality of positive electrode sheets may be provided, and the negative electrode sheet is folded to form a plurality of stacked folded segments, with one positive electrode sheet sandwiched between adjacent folded segments.

As an example, both the positive electrode sheet and the negative electrode sheet are folded to form a plurality of stacked folded segments.

As an example, a plurality of separators may be provided, respectively disposed between any adjacent positive electrode sheets or negative electrode sheets.

As an example, the separator may be continuously provided and disposed between any adjacent positive electrode sheets or negative electrode sheets by folding or winding.

In some implementations, the shape of the electrode assembly may be cylindrical, flat, polyhedral, or the like.

In some implementations, the electrode assembly has a tab, and the tab can conduct current away fromthe electrode assembly. The tab includes a positive tab and a negative tab.

In some implementations, the battery cell can include a housing. The housing is used for packaging components such as the electrode assembly and the electrolyte. The housing may be a steel housing, aluminum housing, plastic housing (such as polypropylene), composite metal housing (such as copper-aluminum composite housing), aluminum-plastic film, or the like.

As an example, the battery cell may be a cylindrical battery cell, a prismatic battery cell, a pouch battery cell, or a battery cell of other shapes. Prismatic battery cells include but are not limited to square shell battery cells, blade-shaped battery cells, and polyhedral batteries, such as hexahedral batteries.

The battery mentioned in the embodiments of the present application refers to a single physical module including one or more battery cells to provide higher voltage and capacity.

In some embodiments, the battery may be a battery module. When there are a plurality of battery cells, the plurality of battery cells are arranged and fixed to form a battery module.

In some embodiments, the battery maybe a battery pack. The battery pack includes an enclosure and battery cells, and the battery cells or battery modules are accommodated in the enclosure.

In some embodiments, the enclosure may be used as a part of a chassis structure of a vehicle. For example, a part of the enclosure may become at least a part of the floor of a vehicle, or a part of the enclosure may become at least a part of a crossbeam and a longitudinal beam of the vehicle.

In some embodiments, the battery may be an energy storage device. The energy storage device includes an energy storage container, an energy storage electric cabinet, and the like.

The battery has outstanding advantages such as high energy density, low environmental pollution, high power density, long service life, wide adaptation range, and small self-discharge coefficient, and is an important component of current development of new energy technologies. The development of battery technology needs to consider various design factors simultaneously, such as performance parameters including energy density, cycle life, discharge capacity, and charge-discharge rate. In addition, the usage stability of the battery also needs to be considered.

For a general battery cell, the housing of the battery cell usually includes a casing and an end cover. The end cover covers an opening of the casing. To facilitate assembly of the battery cell, the electrode terminal is usually riveted and assembled to the end cover of the battery cell, which means that the electrode terminal is an integral structure. Through the riveting assembly method, the electrode terminal forms a flanged structure to assemble the electrode terminal on the end cover, so that when the end cover and the casing are covered, the electrode terminal can first be welded to the tab of the electrode assembly through a current collecting member disposed in the casing to achieve electrical connection between the electrode terminal and the electrode assembly, thereby using the electrode terminal as an output pole of the battery cell to enable the electrical energy input to or output from the battery cell, and finally connecting the end cover to the casing. However, in the battery cell with this structure, the size of the riveted flange of the electrode terminal is short, so that the structural strength of the riveted flange structure of the electrode terminal is weak, thereby resulting in low structural strength and poor structural stability of the electrode terminal assembled on the end cover of the housing, making the electrode terminal at risk of detachment during use, thereby resulting in poor usage stability of the battery cell and a short service life.

Based on the above considerations, in order to solve the problems of poor usage stability and short service life of the battery cell, embodiments of the present application provide a battery cell. The battery cell includes a housing, an electrode assembly, and an electrode terminal. The housing has a wall portion, the wall portion is provided with a mounting hole, and the mounting hole extends through the wall portion along a thickness direction of the wall portion. The electrode assembly is accommodated in the housing. The electrode terminal extends through the mounting hole, the electrode terminal includes a first terminal portion and a second terminal portion that are separately provided, the first terminal portion and the second terminal portion are arranged along the thickness direction of the wall portion and connected to each other, at least a part of the first terminal portion is located on a side of the wall portion facing the electrode assembly, the first terminal portion is electrically connected to the electrode assembly, at least a part of the second terminal portion is located on a side of the wall portion facing away from the electrode assembly, and the first terminal portion and the second terminal portion are configured to cooperatively clamp the wall portion to restrict the electrode terminal from detaching from the wall portion along the thickness direction of the wall portion.

In the battery cell with this structure, the electrode terminal is provided with the first terminal portion and the second terminal portion that are arranged along the thickness direction of the wall portion and connected to each other, at least a part of the first terminal portion is located on the side of the wall portion facing the electrode assembly, and at least a part of the second terminal portion is located on the side of the wall portion facing away from the electrode assembly, such that the first terminal portion and the second terminal portion can cooperatively clamp the wall portion, thereby enabling the electrode terminal to be assembled onto the wall portion. A battery cell with this structure does not require the electrode terminals to be assembled onto the wall portion by a riveting process, and radial dimensions of the separately provided first terminal portion and second terminal portion can be increased according to actual needs, which is beneficial to improving the structural strength of the first terminal portion and the second terminal portion, thereby effectively improving the structural strength and structural stability of the electrode terminal assembled on the wall portion, reducing the risk of detachment of the electrode terminal during use, and further helping to improve the usage stability and service life of the battery cell.

The battery cell disclosed in the embodiments of the present application may be, but is not limited to, used in electric devices such as vehicles, ships, or aircraft. The power system of the electric device may be composed of the battery cell, the battery, and the like disclosed in the present application, which is beneficial to alleviating the problem that the electrode terminal is prone to detachment during use, improving usage stability and service life of the battery cell.

Embodiments of the present application provide an electric device using a battery as a power source. The electric device may be, but is not limited to, a mobile phone, a tablet, a laptop computer, an electric toy, an electric tool, an electric bicycle, an electric vehicle, a ship, and a spacecraft. The electric toy may include a fixed or mobile electric toy, such as a game console, an electric car toy, an electric ship toy, and an electric airplane toy, and the spacecraft may include an airplane, a rocket, a space shuttle, a spaceship, and the like.

For ease of description, the following embodiments take a vehicle as an example of an electric device according to an embodiment of the present application for illustration.

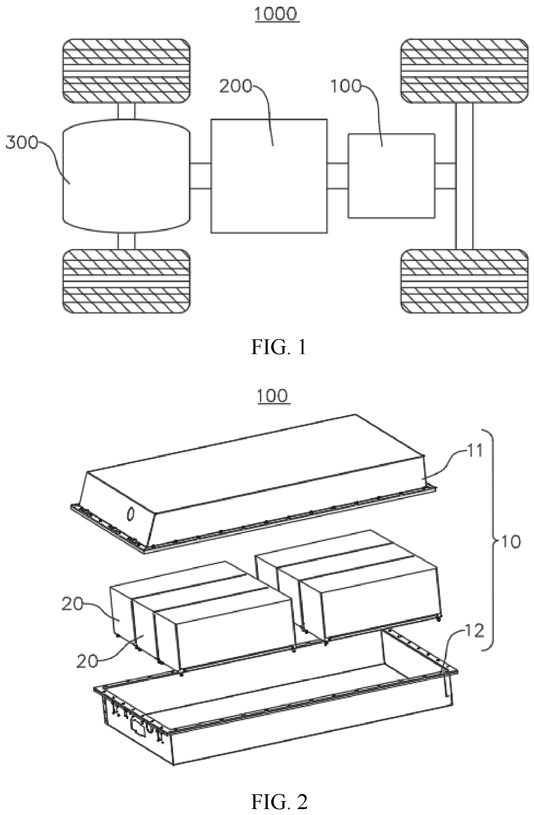

Referring to FIG. 1, where FIG. 1 is a schematic structural diagram of a vehicle 1000 according to some embodiments of the present application, the vehicle 1000 may be a fuel vehicle, a gas vehicle, or a new energy vehicle, where the new energy vehicle may be a pure electric vehicle, a hybrid electric vehicle, or an extended-range vehicle, or the like. A battery 100 is provided inside the vehicle 1000, and the battery 100 may be positioned at the bottom, front, or rear of the vehicle 1000. The battery 100 may be configured to supply power to the vehicle 1000. For example, the battery 100 may serve as an operating power source or a usage power source of the vehicle 1000. The vehicle 1000 may further include a controller 200 and a motor 300, where the controller 200 is used to control the battery 100 to supply power to the motor 300, for example, to satisfy power needs during startup, navigation, and driving of the vehicle 1000.

In some embodiments of the present application, the battery 100 can not only serve as an operating power source or usage power source of the vehicle 1000, but also can serve as a driving power source of the vehicle 1000, replacing or partially replacing fuel or natural gas to provide driving power for the vehicle 1000.

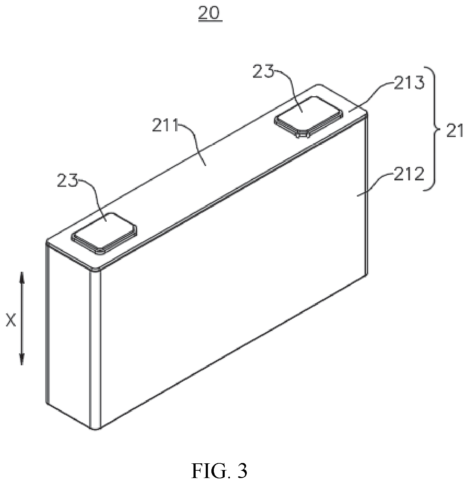

Referring to FIG. 2 and FIG. 3, where FIG. 2 is an exploded structural diagram of a battery 100 according to some embodiments of the present application, and FIG. 3 is a schematic structural diagram of a battery cell 20 according to some embodiments of the present application, the battery 100 includes an enclosure 10 and battery cells 20, and the battery cells 20 are accommodated in the enclosure 10.

The enclosure 10 is used to provide assembly space for the battery cells 20, and the enclosure 10 can adopt various structures. In some embodiments, the enclosure 10 can include a first enclosure body 11 and a second enclosure body 12, the first enclosure body 11 and the second enclosure body 12 cover each other, and the first enclosure body 11 and the second enclosure body 12 jointly define an assembly space for accommodating the battery cells 20. The second enclosure body 12 may be a hollow structure with one end open, the first enclosure body 11 may be a plate-like structure, and the first enclosure body 11 covers the open side of the second enclosure body 12, so that the first enclosure body 11 and the second enclosure body 12 jointly define an assembly space; and the first enclosure body 11 and the second enclosure body 12 may alternatively both be hollow structures with one side open, and the open side of the first enclosure body 11 covers the open side of the second enclosure body 12.

Certainly, the enclosure 10 formed by the first enclosure body 11 and the second enclosure body 12 may be of various shapes, such as a cylinder, a cuboid, or a cube. By way of example, in FIG. 2, the enclosure 10 has a cuboid shape.

In the battery 100, there may be one or more battery cells 20 provided in the enclosure 10. When there are a plurality of battery cells 20 provided in the enclosure 10, the plurality of battery cells 20 may be connected in series, parallel, or series-parallel, and being connected in series-parallel means that a combination of series and parallel connections of the plurality of battery cells 20. The plurality of battery cells 20 may be directly connected in series, parallel, or series-parallel, and then an entirety of the plurality of battery cells 20 is accommodated in the enclosure 10; certainly, the battery 100 can include a plurality of battery cells 20 first connected in series, parallel, or series-parallel to form battery modules, and then a plurality of battery modules are further connected in series, parallel, or series-parallel to form an integral assembly accommodated in the enclosure 10.

In some embodiments, the battery 100 may further include other structures. For example, the battery 100 may further include a busbar component which is configured to connect a plurality of battery cells 20 to achieve electrical connection between the plurality of battery cells 20. The busbar component serves to connect the plurality of battery cells 20 in series, parallel, or series-parallel, and the busbar component may be made of a material such as copper, iron, aluminum, steel, or aluminum alloy.

Each battery cell 20 may be a secondary battery or a primary battery, or may be a lithium-sulfur battery, a sodium-ion battery, or a magnesium-ion battery, without being limited thereto. The battery cell 20 may be in the shape of a cuboid, cylinder, prism, or other shapes. By way of example, in FIG. 3, the battery cell 20 has a cuboid structure.

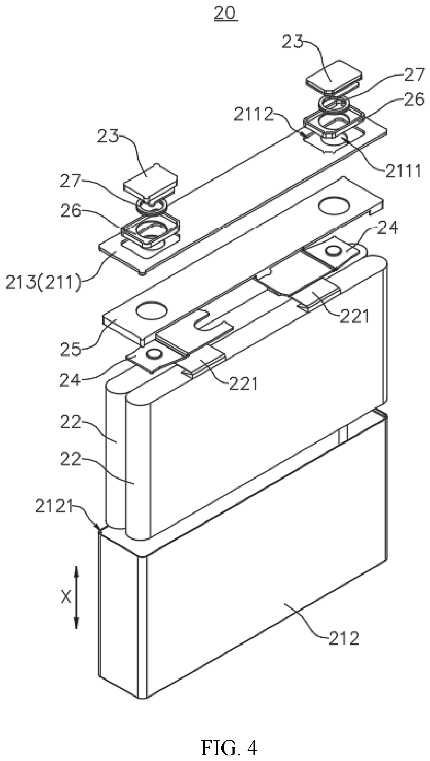

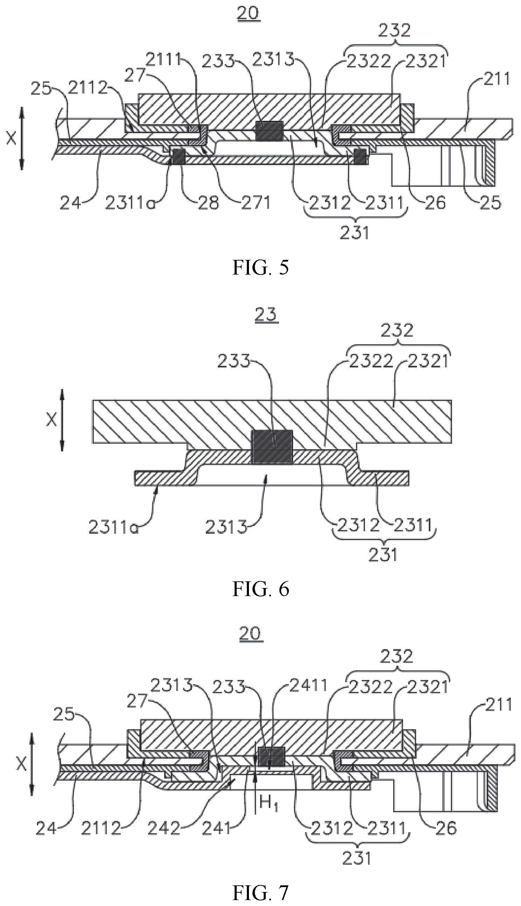

According to some embodiments of the present application, referring to FIG. 3, and further referring to FIG. 4, FIG. 5, and FIG. 6, where FIG. 4 is an exploded structural diagram of a battery cell 20 according to some embodiments of the present application, FIG. 5 is a partial cross-sectional view of a battery cell 20 according to some embodiments of the present application, and FIG. 6 is a cross-sectional view of an electrode terminal 23 of a battery cell 20 according to some embodiments of the present application, the present application provides a battery cell 20, and the battery cell 20 includes a housing 21, an electrode assembly 22, and an electrode terminal 23. The housing 21 has a wall portion 211, the wall portion 211 is provided with a mounting hole 2111, and the mounting hole 2111 extends through the wall portion 211 along a thickness direction X of the wall portion. The electrode assembly 22 is accommodated in the housing 21. The electrode terminal 23 extends through the mounting hole 2111, the electrode terminal 23 includes a first terminal portion 231 and a second terminal portion 232 that are separately provided, the first terminal portion 231 and the second terminal portion 232 are arranged along the thickness direction X of the wall portion and connected to each other, at least a part of the first terminal portion 231 is located on a side of the wall portion 211 facing the electrode assembly 22 and is electrically connected to the electrode assembly 22, at least a part of the second terminal portion 232 is located on a side of the wall portion 211 facing away from the electrode assembly 22, and the first terminal portion 231 and the second terminal portion 232 are configured to cooperatively clamp the wall portion 211.

The housing 21 may also be used to accommodate an electrolyte, such as an electrolyte solution. The housing 21 may have various structural forms. The housing 21 may be made of various materials, such as copper, iron, aluminum, steel, and aluminum alloy.

In some embodiments, the housing 21 can include a casing 212 and an end cover 213, where the casing 212 has an internal accommodation cavity with an opening 2121, which means that the casing 212 is a hollow structure with one end open, and the end cover 213 covers the opening 2121 of the casing 212 and forms a sealed connection to form a sealed space for accommodating the electrode assembly 22 and the electrolyte.

Optionally, the wall portion 211 for mounting the electrode terminal 23 and provided with the mounting hole 2111 may be the end cover 213, or may be one of a plurality of walls of the casing 212. By way of example, in FIG. 3 and FIG. 4, the wall portion 211 is the end cover 213 of the housing 21. Certainly, in other embodiments, the wall portion 211 may be a bottom wall of the casing 212 disposed opposite to the end cover 213 in the thickness direction X of the wall portion or a side wall adjacent to and abutting the end cover 213.

In assembling the battery cell 20, the electrode assembly 22 may be first placed into the casing 212, and electrolyte may be filled into the casing 212, then the end cover 213 is covered on the opening 2121 of the casing 212 to close the opening 2121 of the casing 212.

The mounting hole 2111 extends through the wall portion 211 along the thickness direction X of the wall portion, which means that the mounting hole 2111 extends along the thickness direction X of the wall portion and passes through surfaces on two sides of the wall portion 211.

The casing 212 may have various shapes, such as cylinder or cuboid. The shape of the casing 212 may be determined according to the specific shape of the electrode assembly 22. For example, if the electrode assembly 22 has a cylindrical structure, the casing 212 may be selected to have a cylindrical structure; if the electrode assembly 22 has a cuboid structure, the casing 212 may be selected to have a cuboid structure. Certainly, the end cover 213 may have various structures, such as a plate-like structure or a hollow structure with one end open. By way of example, in FIG. 4, the casing 212 has a cuboid structure.

It is understandable that the housing 21 is not limited to the above structure, and the housing 21 may alternatively have other structures. For example, the housing 21 includes a casing 212 and two end covers 213, the casing 212 is a hollow structure with openings 2121 on opposite sides, and one end cover 213 correspondingly covers one opening 2121 of the casing 212 and forms a sealed connection to form a sealed space for accommodating the electrode assembly 22 and the electrolyte.

The electrode assembly 22 is a component in the battery cell 20 in which electrochemical reactions occur, and the structure of the electrode assembly 22 may be various, for example, the electrode assembly 22 may be a wound structure formed by winding a positive electrode sheet, a separator, and a negative electrode sheet, or may be a stacked structure formed by stacking a positive electrode sheet, a separator, and a negative electrode sheet.

By way of example, the separator is a separator film, and the main material of the separator film can be selected from at least one of glass fiber, non-woven fabric, polyethylene, polypropylene, and polyvinylidene fluoride.

A tab 221 is formed at one end of the electrode assembly 22 close to the wall portion 211 in the thickness direction X of the wall portion, where the tab 221 is used for inputting to or output from the positive or negative electrode of the electrode assembly 22, and the tab 221 is used to connect to the electrode terminal 23 to achieve electrical connection between the electrode assembly 22 and the electrode terminal 23. It should be noted that the tab 221 of the electrode assembly 22 is a component formed by stacking regions on the positive electrode sheet not coated with positive electrode active substance layer or regions on the negative electrode sheet not coated with negative electrode active substance layer. If the tab 221 serves as the positive electrode terminal of the electrode assembly 22, the tab 221 is a component formed by stacking regions on the positive electrode sheet not coated with positive electrode active substance layer; if the tab 221 serves as the negative electrode terminal of the electrode assembly 22, the tab 221 is a component formed by stacking regions on the negative electrode sheet not coated with negative electrode active substance layer.

By way of example, the tab 221 may be made of a material such as copper or aluminum.

Optionally, one or more electrode assemblies 22 may be accommodated in the housing 21. By way of example, in FIG. 4, two electrode assemblies 22 are provided in the housing 21 of the battery cell 20, and the two electrode assemblies 22 are stacked along their thickness direction, that is, the two electrode assemblies 22 are stacked along the thickness direction of the battery cell 20. Certainly, in other embodiments, one, three, four, five, six, seven, eight, or more electrode assemblies 22 may be accommodated in the housing 21.

The electrode terminal 23 serves to output or input electrical energy of the battery cell 20, one end of the electrode terminal 23 is used to connect to the tab 221 of the electrode assembly 22, and the other end is used to connect to a busbar component, to enable the electrical energy input to or output from the battery cell 20.

By way of example, the electrode terminal 23 may be made of various materials, for example, the electrode terminal 23 may be made of copper, iron, aluminum, steel, aluminum alloy, or the like. Certainly, in some embodiments, the electrode terminal 23 may be a composite material, which means that the electrode terminal 23 is compositely connected by two different metal materials, such as hot pressing or cold pressing.

The electrode terminal 23 extends through the mounting hole 2111, which means that the electrode terminal 23 passes through the mounting hole 2111, and two ends of the electrode terminal 23 respectively extend out of the mounting hole 2111 in the thickness direction X of the wall portion, so that a part of the electrode terminal 23 is located within the mounting hole 2111, to enable the electrode terminal 23 to connect to the electrode assembly 22 located inside the housing 21 and connect to a busbar component located outside the battery cell 20, enabling the electrical energy input to or output from the battery cell 20.

The electrode terminal 23 includes a first terminal portion 231 and a second terminal portion 232 that are separately provided, the first terminal portion 231 and the second terminal portion 232 are arranged along the thickness direction X of the wall portion and connected to each other, that is, the electrode terminal 23 is composed of two parts: the first terminal portion 231 and second terminal portion 232 that are separately provided, and the first terminal portion 231 and the second terminal portion 232 are structures provided along the thickness direction X of the wall portion. By connecting the first terminal portion 231 and the second terminal portion 232 to each other, the electrode assembly 22 can be electrically connected to the second terminal portion 232 through the first terminal portion 231, thereby enabling the electrical energy input to or output from the electrode assembly 22.

The first terminal portion 231 is used to electrically connect to the electrode assembly 22, and the second terminal portion 232 is used to electrically connect to a busbar component to enable the electrical energy input to or output from the battery cell 20.

It should be noted that the first terminal portion 231 and the second terminal portion 232 are structures arranged along the thickness direction X of the wall portion, and the first terminal portion 231 and the second terminal portion 232 may be mutually independent structures sequentially provided along the thickness direction X of the wall portion, or may be structures partially embedded in each other, which means that a part of the first terminal portion 231 may be fitted into the second terminal portion 232, or a part of the second terminal portion 232 may be fitted into the first terminal portion 231.

Optionally, the connection structure between the first terminal portion 231 and the second terminal portion 232 can be of various types, such as welding, clamping, or bolting.

At least a part of the first terminal portion 231 is located on the side of the wall portion 211 facing the electrode assembly 22, and the first terminal portion 231 is electrically connected to the electrode assembly 22, which means that the first terminal portion 231 serves to connect the electrode assembly 22, and the first terminal portion 231 has a part located on the side of the wall portion 211 facing the electrode assembly 22, that is, at least a part of the first terminal portion 231 overlaps with the wall portion 211 in the thickness direction X of the wall portion, and this part is located on the side of the wall portion 211 facing the electrode assembly 22. It should be noted that the first terminal portion 231 is connected to the tab 221 of the electrode assembly 22 to achieve electrical connection between the first terminal portion 231 and the electrode assembly 22, the first terminal portion 231 may be directly connected to the tab 221 of the electrode assembly 22, such as welding or abutting, or may be indirectly connected to the tab 221 of the electrode assembly 22 through other components.

In some embodiments, in FIG. 4 and FIG. 5, the battery cell 20 may further include a current collecting member 24, where the current collecting member 24 is provided in the housing 21, and the current collecting member 24 connects the first terminal portion 231 and the tab 221 of the electrode assembly 22 to achieve electrical connection between the electrode assembly 22 and the electrode terminal 23.

By way of example, the current collecting member 24 is welded to the first terminal portion 231 and welded to the tab 221. Certainly, in other embodiments, the current collecting member 24 may be abutted against or bonded to the first terminal portion 231. Similarly, the current collecting member 24 may be abutted against or bonded to the tab 221.

At least a part of the second terminal portion 232 is located on the side of the wall portion 211 facing away from the electrode assembly 22, which means that the second terminal portion 232 has a part located on the side of the wall portion 211 facing away from the electrode assembly 22, that is, at least a part of the second terminal portion 232 overlaps with the wall portion 211 in the thickness direction X of the wall portion, and this part is located on the side of the wall portion 211 facing away from the electrode assembly 22.

The electrode terminal 23 is mounted on the wall portion 211 in an insulated manner, which means that no electrical connection is formed between the electrode terminal 23 and the wall portion 211. In some embodiments, as shown in FIG. 4 and FIG. 5, the battery cell 20 may further include a first insulating member 25 and a second insulating member 26, the first insulating member 25 is located on the side of the wall portion 211 facing the electrode assembly 22, at least a part of the first insulating member 25 is located between the wall portion 211 and the first terminal portion 231 to insulate and isolate the wall portion 211 from the first terminal portion 231, the second insulating member 26 is located on the side of the wall portion 211 facing away from the electrode assembly 22, and at least a part of the second insulating member 26 is located between the wall portion 211 and the second terminal portion 232 to insulate and isolate the wall portion 211 from the second terminal portion 232.

Optionally, the first insulating member 25 and the second insulating member 26 can be made of various materials, for example, the first insulating member 25 and the second insulating member 26 may be made of rubber, silicone, plastic, or the like.

The first terminal portion 231 and the second terminal portion 232 are configured to cooperatively clamp the wall portion 211, that is, the part of the first terminal portion 231 located on the side of the wall portion 211 facing the electrode assembly 22 and the part of the second terminal portion 232 located on the side of the wall portion 211 facing away from the electrode assembly 22 can cooperatively clamp the wall portion 211 to assemble the electrode terminal 23 onto the wall portion 211, thereby restricting the electrode terminal 23 from detaching from the wall portion 211 along the thickness direction X of the wall portion.

It should be noted that the first terminal portion 231 and the second terminal portion 232 may directly cooperatively clamp the wall portion 211, which means that the part of the first terminal portion 231 located on the side of the wall portion 211 facing the electrode assembly 22 and the part of the second terminal portion 232 located on the side of the wall portion 211 facing away from the electrode assembly 22 directly abut against the wall portion 211. Certainly, the first terminal portion 231 and the second terminal portion 232 may indirectly cooperatively clamp the wall portion 211, which means that the part of the first terminal portion 231 located on the side of the wall portion 211 facing the electrode assembly 22 and the part of the second terminal portion 232 located on the side of the wall portion 211 facing away from the electrode assembly 22 indirectly abut against the wall portion 211 through other components. By way of example, in FIG. 5, the first terminal portion 231 indirectly abuts against the wall portion 211 through the first insulating member 25. Similarly, the second terminal portion 232 indirectly abuts against the wall portion 211 through the second insulating member 26.

In some embodiments, the battery cell 20 may further include a sealing member 27, the sealing member 27 is disposed between the wall portion 211 and the electrode terminal 23, and at least a part of the sealing member 27 is located within the mounting hole 2111, and the sealing member 27 is configured to seal a gap between the electrode terminal 23 and a wall surface of the mounting hole 2111.

By way of example, the sealing member 27 may be made of a material such as rubber, silicone, or plastic.

In FIG. 4, the battery cell 20 includes two electrode terminals 23 and two current collecting members 24, correspondingly, each electrode assembly 22 has two tabs 221, and the two tabs 221 have opposite polarities, and the two electrode terminals 23 are respectively electrically connected to the two tabs 221 of the electrode assembly 22 through the two current collecting members 24 to enable the positive electrode and negative electrode of the battery cell 20 to perform input or output.

Optionally, both electrode terminals 23 are mounted on the wall portion 211, and each electrode terminal 23 is electrically connected to one tab 221 of the electrode assembly 22 for outputting from the positive electrode and negative electrode of the battery cell 20. Certainly, in other embodiments, the two electrode terminals 23 can also be mounted on different walls of the housing 21.

In some embodiments, the battery cell 20 may further include a pressure relief mechanism, where the pressure relief mechanism is provided on the housing 21, and the pressure relief mechanism is used to release internal pressure of the battery cell 20 when internal pressure or temperature of the battery cell 20 reaches a predetermined value.

Optionally, the pressure relief mechanism may be provided on the end cover 213 of the housing 21, or may be provided on the casing 212 of the housing 21. Similarly, the pressure relief mechanism and the housing 21 may be of an integrally formed structure or a separately provided structure. If the pressure relief mechanism and the housing 21 are of a separately provided structure, the pressure relief mechanism may be connected to the housing 21 by welding or the like, and correspondingly, the pressure relief mechanism may be a pressure relief component such as an explosion-proof valve, an explosion-proof sheet, a gas valve, a pressure relief valve, or a safety valve. If the pressure relief mechanism and the housing 21 are of an integrally formed structure, the pressure relief mechanism is a region on the housing 21 formed with a weak structure, such as a region on the housing 21 provided with a scored groove.

The electrode terminal 23 is provided with the first terminal portion 231 and the second terminal portion 232 that are arranged along the thickness direction X of the wall portion and connected to each other, at least a part of the first terminal portion 231 is located on the side of the wall portion 211 facing the electrode assembly 22, and at least a part of the second terminal portion 232 is located on the side of the wall portion 211 facing away from the electrode assembly 22, such that the first terminal portion 231 and the second terminal portion 232 can cooperatively clamp the wall portion 211, thereby enabling the electrode terminal 23 to be assembled onto the wall portion 211 to restrict the electrode terminal 23 from detaching from the wall portion 211 along the thickness direction X of the wall portion. A battery cell 20 with this structure does not require the electrode terminal 23 to be assembled onto the wall portion 211 by a riveting process, and radial dimensions of the separately provided first terminal portion 231 and second terminal portion 232 can be increased according to actual needs, which is beneficial to improving the structural strength of the first terminal portion 231 and the second terminal portion 232, thereby effectively improving the structural strength and structural stability of the electrode terminal 23 assembled on the wall portion 211, reducing the risk of detachment of the electrode terminal 23 during use, and further helping to improve the usage stability and service life of the battery cell 20.

According to some embodiments of the present application, as shown in FIG. 5 and FIG. 6, the first terminal portion 231 can include a first limiting portion 2311 and a first protrusion 2312. Along the thickness direction X of the wall portion, the first limiting portion 2311 is located on the side of the wall portion 211 facing the electrode assembly 22, and the first limiting portion 2311 is configured to cooperate with the second terminal portion 232 to clamp the wall portion 211. The first protrusion 2312 is protrudingly formed on a side of the first limiting portion 2311 facing away from the electrode assembly 22, and the first protrusion 2312 is disposed in the mounting hole 2111 along the thickness direction X of the wall portion and connected to the second terminal portion 232.

The first limiting portion 2311 is located on the side of the wall portion 211 facing the electrode assembly 22, which means that the first limiting portion 2311 of the first terminal portion 231 is located on the side of the wall portion 211 facing the interior of the housing 21, so that the first limiting portion 2311 is located inside the housing 21.

The first protrusion 2312 is protrudingly formed on the side of the first limiting portion 2311 facing away from the electrode assembly 22, which means that the first protrusion 2312 is a structure extending and protruding from the side of the first limiting portion 2311 facing away from the electrode assembly 22 in a direction away from the electrode assembly 22.

The first protrusion 2312 is disposed in the mounting hole 2111 along the thickness direction X of the wall portion and connected to the second terminal portion 232, which means that the first protrusion 2312 is fitted into the mounting hole 2111 of the wall portion 211 and connected to the second terminal portion 232.

The first terminal portion 231 is provided with the first limiting portion 2311 and the first protrusion 2312, and the first limiting portion 2311 is located on the side of the wall portion 211 facing the electrode assembly 22, so that the first limiting portion 2311 can cooperate with the second terminal portion 232 to clamp the wall portion 211. The first protrusion 2312 is protrudingly formed on the side of the first limiting portion 2311 facing away from the electrode assembly 22 and disposed in the mounting hole 2111, such that the first terminal portion 231 can be connected to the second terminal portion 232 through the first protrusion 2312 disposed in the mounting hole 2111, enabling the first terminal portion 231 and the second terminal portion 232 to be arranged along the thickness direction X of the wall portion and connected to each other, which is beneficial to reducing the difficulty of connecting the first terminal portion 231 and the second terminal portion 232 to each other.

In some embodiments, with continued reference to FIG. 5 and FIG. 6, the second terminal portion 232 can include a second limiting portion 2321 and a second protrusion 2322. Along the thickness direction X of the wall portion, the second limiting portion 2321 is located on the side of the wall portion 211 facing away from the electrode assembly 22, at least a part of the wall portion 211 is located between the second limiting portion 2321 and the first limiting portion 2311, and the second limiting portion 2321 is configured to cooperate with the first limiting portion 2311 to clamp the wall portion 211. The second protrusion 2322 is protrudingly formed on a side of the second limiting portion 2321 facing the electrode assembly 22, and the second protrusion 2322 is connected to the first protrusion 2312.

The second limiting portion 2321 is located on the side of the wall portion 211 facing away from the electrode assembly 22, which means that the second limiting portion 2321 of the second terminal portion 232 is located on the side of the wall portion 211 facing away from the interior of the housing 21, so that the second limiting portion 2321 is located outside the housing 21.

At least a part of the wall portion 211 is located between the second limiting portion 2321 and the first limiting portion 2311, which means that at least a part of the wall portion 211 is clamped between the first limiting portion 2311 and the second limiting portion 2321 to enable the electrode terminal 23 to be assembled onto the wall portion 211, which means that in the thickness direction X of the wall portion, at least a part of the wall portion 211 overlaps with the first limiting portion 2311 and the second limiting portion 2321.

The second protrusion 2322 is protrudingly formed on the side of the second limiting portion 2321 facing the electrode assembly 22, and the second protrusion 2322 is connected to the first protrusion 2312, that is, the first protrusion 2312 of the first terminal portion 231 is connected to the second protrusion 2322 of the second terminal portion 232, enabling the first terminal portion 231 and the second terminal portion 232 to be arranged along the thickness direction X of the wall portion and connected to each other. Certainly, in other embodiments, the second terminal portion 232 may not be provided with the second protrusion 2322, which means that the first protrusion 2312 may be directly connected to the side of the second limiting portion 2321 facing the electrode assembly 22.

The second terminal portion 232 is provided with the second limiting portion 2321 and the second protrusion 2322, the second limiting portion 2321 is located on the side of the wall portion 211 facing away from the electrode assembly 22 so that the second limiting portion 2321 can cooperate with the first limiting portion 2311 to clamp the wall portion 211. The second protrusion 2322 is protrudingly formed on the side of the second limiting portion 2321 facing the electrode assembly 22, thereby facilitating mutual connection between the first terminal portion 231 and the second terminal portion 232 through a structure in which the first protrusion 2312 and the second protrusion 2322 are connected to each other. This structure is simple and convenient for assembly, and is further beneficial to optimizing the size of the first protrusion 2312 protruding from the first limiting portion 2311 to reduce the processing difficulty of the first terminal portion 231.

According to some embodiments of the present application, as shown in FIG. 5 and FIG. 6, along the thickness direction X of the wall portion, a first groove 2313 is formed on a side of the first terminal portion 231 facing the electrode assembly 22, at a position corresponding to the first protrusion 2312.

By way of example, the first protrusion 2312 provided on the side of the first limiting portion 2311 facing away from the electrode assembly 22 is formed by a stamping process, so that the first protrusion 2312 is formed on the side of the first limiting portion 2311 facing away from the electrode assembly 22, and the first groove 2313 is formed on the side of the first limiting portion 2311 facing the electrode assembly 22, at a position corresponding to the first protrusion 2312. Certainly, the processing method of the first protrusion 2312 provided on the side of the first limiting portion 2311 facing away from the electrode assembly 22 is not limited thereto, and in other embodiments, the first protrusion 2312 provided on the side of the first limiting portion 2311 facing away from the electrode assembly 22 may also be formed by processing processes such as casting or milling.

By forming the first groove 2313 on the side of the first terminal portion 231 facing the electrode assembly 22, in a region corresponding to the first protrusion 2312, the first terminal portion 231 is a structure that can be formed by stamping, so that the first protrusion 2312 and the first groove 2313 are respectively formed on two sides of the first terminal portion 231, which is beneficial to reducing the manufacturing difficulty of the first terminal portion 231. In addition, by providing the first groove 2313 on the first terminal portion 231, the thickness of a region of the first terminal portion 231 at which the first protrusion 2312 is provided can be reduced, thereby reducing the difficulty of mutual assembly between the first protrusion 2312 and the second terminal portion 232.

According to some embodiments of the present application, as shown in FIG. 5 and FIG. 6, the first protrusion 2312 and the second terminal portion 232 are connected by welding to form a first weld mark 233, and at least a part of the first weld mark 233 is formed on a bottom surface of the first groove 2313.

The first protrusion 2312 and the second terminal portion 232 are connected by welding to form the first weld mark 233, which means that the first protrusion 2312 of the first terminal portion 231 and the second terminal portion 232 are structures connected to each other by welding, and the first weld mark 233 is formed between the first protrusion 2312 of the first terminal portion 231 and the second terminal portion 232.

At least a part of the first weld mark 233 is formed on the bottom surface of the first groove 2313, which means that the first weld mark 233 formed by mutual welding between the first protrusion 2312 of the first terminal portion 231 and the second terminal portion 232 extends to the bottom surface of the first groove 2313, that is, the first protrusion 2312 of the first terminal portion 231 and the second terminal portion 232 are structures welded from a side of the bottom surface of the first groove 2313.

By way of example, the first protrusion 2312 of the first terminal portion 231 and the second terminal portion 232 may be welded to each other by welding processes such as laser welding or ultrasonic welding.

It should be noted that in the embodiments in which the second terminal portion 232 includes the second limiting portion 2321 and the second protrusion 2322, as shown in FIG. 6, the first protrusion 2312 is a structure welded to the second protrusion 2322, and the first weld mark 233 is formed between the first protrusion 2312 and the second protrusion 2322.

By configuring the first protrusion 2312 and the second terminal portion 232 to be welded to each other, and forming at least a part of the first weld mark 233, created by the welding between the first protrusion 2312 and the second terminal portion 232, on the bottom surface of the first groove 2313, the first weld mark 233 is structured to extend into the first groove 2313. A battery cell 20 with this structure allows welding assembly of the first protrusion 2312 and the second terminal portion 232 from a side of the first terminal portion 231 at which the first groove 2313 is provided, so that welding connection between the first terminal portion 231 and the second terminal portion 232 is performed from a side of a thinned region in which the first groove 2313 is formed in the first terminal portion 231, thereby helping to reduce the difficulty of welding between the first terminal portion 231 and the second terminal portion 232, as well as the power required for the welding.

According to some embodiments of the present application, as shown in FIG. 4 and FIG. 5, the battery cell 20 may further include a current collecting member 24. The current collecting member 24 is disposed between the wall portion 211 and the electrode assembly 22, the current collecting member 24 is connected to the first terminal portion 231 and the electrode assembly 22 to electrically connect the first terminal portion 231 and the electrode assembly 22, and the current collecting member 24 is spaced apart from the first weld mark 233.

The current collecting member 24 serves to connect the first terminal portion 231 of the electrode terminal 23 and the tab 221 of the electrode assembly 22 to achieve electrical connection between the electrode assembly 22 and the electrode terminal 23. The current collecting member 24 may be made of various materials, such as copper, iron, aluminum, steel, and aluminum alloy.

Optionally, in FIG. 4 and FIG. 5, there are two electrode terminals 23 and two current collecting members 24, and each electrode terminal 23 is connected to the electrode assembly 22 through one current collecting member 24 to output from the positive electrode and negative electrode of the battery cell 20.

In FIG. 5, a part of the current collecting member 24 is located between the first terminal portion 231 and the electrode assembly 22 to connect the first terminal portion 231 and the tab 221 of the electrode assembly 22. The current collecting member 24 is spaced apart from the first weld mark 233, which means that the current collecting member 24 is not in contact with the first weld mark 233 formed by welding connection between the first terminal portion 231 and the second terminal portion 232, and a gap is formed between the current collecting member 24 and the first weld mark 233.

The battery cell 20 is further provided with the current collecting member 24 through which the first terminal portion 231 and the electrode assembly 22 are connected to achieve electrical connection between the electrode assembly 22 and the electrode terminal 23, which is beneficial to reducing the connection difficulty between the electrode assembly 22 and the first terminal portion 231. In addition, by arranging the current collecting member 24 and the first weld mark 233 to be spaced apart, the current collecting member 24 can be prevented from contacting the first weld mark 233 in the thickness direction X of the wall portion, thereby reducing interference of the first weld mark 233 with the current collecting member 24, which is beneficial to improving the connection quality between the current collecting member 24 and the first terminal portion 231.

According to some embodiments of the present application, as shown in FIG. 5 and FIG. 6, along the thickness direction X of the wall portion, the first limiting portion 2311 has a first surface 2311a facing the electrode assembly 22, the first groove 2313 is recessed from the first surface 2311a in a direction away from the electrode assembly 22, and the first surface 2311a is connected to the current collecting member 24.

The first surface 2311a is a surface of the first limiting portion 2311 on the side facing the electrode assembly 22 in the thickness direction X of the wall portion, and the first groove 2313 is recessed from the first surface 2311a in the direction away from the electrode assembly 22, which means that the first groove 2313 is provided on the first surface 2311a of the first limiting portion 2311 and extends into the first protrusion 2312 along the thickness direction X of the wall portion.

The first surface 2311a is connected to the current collecting member 24, which means that the current collecting member 24 is connected to the side of the first limiting portion 2311 facing the electrode assembly 22. By way of example, the current collecting member 24 is welded to the first limiting portion 2311. Certainly, in other embodiments, the current collecting member 24 and the first surface 2311a may abut against each other.

The first groove 2313 is recessed from the first surface 2311a of the first limiting portion 2311 in the direction away from the electrode assembly 22, so that the current collecting member 24 is connected to the first surface 2311a of the first limiting portion 2311 provided with the first groove 2313, enabling the first weld mark 233 formed on the bottom surface of the first groove 2313 to be spaced apart from the current collecting member 24 in the thickness direction X of the wall portion through the first groove 2313. As a result, the current collecting member 24 and the first weld mark 233 are spaced apart, so that the current collecting member 24 can be prevented from contacting the first weld mark 233 in the thickness direction X of the wall portion. Such a structure is simple and capable of reducing the connection difficulty between the current collecting member 24 and the first terminal portion 231.

According to some embodiments of the present application, referring to FIG. 7, where FIG. 7 is a partial cross-sectional view of a battery cell 20 according to further embodiments of the present application, along the thickness direction X of the wall portion, a first convex portion 241 is protrudingly formed on a side of the current collecting member 24 facing away from the electrode assembly 22, the first convex portion 241 extending into the first groove 2313 and being connected to the bottom surface of the first groove 2313. A first avoidance groove 2411 for providing clearance for the first weld mark 233 is provided with at an end of the first convex portion 241 facing the bottom surface of the first groove 2313.

Along the thickness direction X of the wall portion, the first convex portion 241 is protrudingly formed on the side of the current collecting member 24 facing away from the electrode assembly 22, which means that the first convex portion 241 is a structure protruding from the side of the current collecting member 24 facing away from the electrode assembly 22 in a direction away from the electrode assembly 22.

The first convex portion 241 extends into the first groove 2313 and is connected to the bottom surface of the first groove 2313, which means that the first convex portion 241 of the current collecting member 24 is fitted into the first groove 2313 of the first terminal portion 231 and connected to the bottom surface of the first groove 2313 to achieve electrical connection between the current collecting member 24 and the first terminal portion 231. By way of example, the first convex portion 241 of the current collecting member 24 is welded to the first terminal portion 231. Certainly, in other embodiments, the first convex portion 241 may abut against the bottom surface of the first groove 2313.

The first avoidance groove 2411 for providing clearance for the first weld mark 233 is provided at the end of the first convex portion 241 facing the bottom surface of the first groove 2313, which means that the first avoidance groove 2411 is provided at the end of the first convex portion 241 facing the bottom surface of the first groove 2313 in the thickness direction X of the wall portion, and the first weld mark 233 is accommodated in the first avoidance groove 2411, enabling the first weld mark 233 to be spaced apart from the first convex portion 241 of the current collecting member 24 and not in contact with each other.

By protrudingly forming the first convex portion 241 on the side of the current collecting member 24 facing away from the electrode assembly 22, the first convex portion 241 can be fitted into the first groove 2313 of the first terminal portion 231 and connected to the bottom surface of the first groove 2313. The current collecting member 24 with this structure can provide a positioning effect through the first convex portion 241 to improve the assembly accuracy between the current collecting member 24 and the first terminal portion 231, and the structure in which the first convex portion 241 and the bottom surface of the first groove 2313 are connected to each other can reduce adverse effect on other components caused by the connection between the current collecting member 24 and the first terminal portion 231. In addition, by providing the first avoidance groove 2411 for providing clearance for the first weld mark 233 at the end of the first convex portion 241 facing the bottom surface of the first groove 2313, the first weld mark 233 formed on the bottom surface of the first groove 2313 can be spaced apart from the current collecting member 24 in the thickness direction X of the wall portion through the first avoidance groove 2411. As a result, the current collecting member 24 and the first weld mark 233 are spaced apart, so that the current collecting member 24 can be prevented from contacting the first weld mark 233 in the thickness direction X of the wall portion.

In some embodiments, with continued reference to FIG. 7, along the thickness direction X of the wall portion, a groove depth of the first avoidance groove 2411 is H₁, satisfying 0.1 mm ≤ H₁ ≤ 0.5 mm.

By way of example, the groove depth H₁ of the first avoidance groove 2411 can be 0.1 mm, 0.15 mm, 0.2 mm, 0.25 mm, 0.3 mm, 0.35 mm, 0.4 mm, 0.45 mm, 0.5 mm, or the like.

By setting the groove depth of the first avoidance groove 2411 in the thickness direction X of the wall portion to be greater than or equal to 0.1 mm, the clearance effect of the first avoidance groove 2411 on the first weld mark 233 is improved, thereby alleviating interference of the first weld mark 233 with the connection between the first convex portion 241 of the current collecting member 24 and the bottom surface of the first groove 2313, which is beneficial to improving the quality of the connection between the first convex portion 241 and the bottom surface of the first groove 2313. By setting the groove depth of the first avoidance groove 2411 in the thickness direction X of the wall portion to be less than or equal to 0.5 mm, the phenomenon of excessive waste of the first avoidance groove 2411 is reduced, which can improve the structural strength of the first convex portion 241 to enhance connection stability between the first convex portion 241 and the bottom surface of the first groove 2313, and reduce the processing difficulty of the first avoidance groove 2411 to improve the processing efficiency of the current collecting member 24.

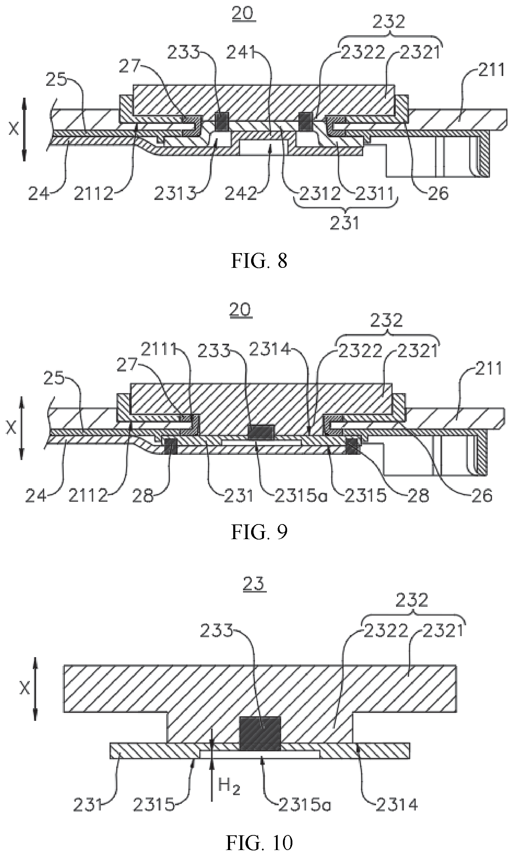

According to some embodiments of the present application, referring to FIG. 8, where FIG. 8 is a partial cross-sectional view of a battery cell 20 in other embodiments according to further embodiments of the present application, along the thickness direction X of the wall portion, a first convex portion 241 is protrudingly formed on a side of the current collecting member 24 facing away from the electrode assembly 22, the first convex portion 241 extending into the first groove 2313 and being connected to the bottom surface of the first groove 2313, and the first weld mark 233 surrounds the outer side of the first convex portion 241.

Along the thickness direction X of the wall portion, the first convex portion 241 is protrudingly formed on the side of the current collecting member 24 facing away from the electrode assembly 22, which means that the first convex portion 241 is a structure protruding from the side of the current collecting member 24 facing away from the electrode assembly 22 in a direction away from the electrode assembly 22.

The first convex portion 241 extends into the first groove 2313 and is connected to the bottom surface of the first groove 2313, which means that the first convex portion 241 of the current collecting member 24 is fitted into the first groove 2313 of the first terminal portion 231 and connected to the bottom surface of the first groove 2313 to achieve electrical connection between the current collecting member 24 and the first terminal portion 231. By way of example, the first convex portion 241 of the current collecting member 24 is welded to the first terminal portion 231. Certainly, in other embodiments, the first convex portion 241 can also abut against the bottom surface of the first groove 2313.

The first weld mark 233 surrounds the outer side of the first convex portion 241, which means that the first weld mark 233 is a structure surrounding the first convex portion 241, so that the first convex portion 241 is located inside the first weld mark 233, enabling the first weld mark 233 to be spaced apart from the first convex portion 241 in a radial direction of the first convex portion 241 and not in contact with each other.

By protrudingly forming the first convex portion 241 on the side of the current collecting member 24 facing away from the electrode assembly 22, the first convex portion 241 can be fitted into the first groove 2313 of the first terminal portion 231 and connected to the bottom surface of the first groove 2313. The current collecting member 24 with this structure can provide a positioning effect through the first convex portion 241 to improve the assembly accuracy between the current collecting member 24 and the first terminal portion 231, and the structure in which the first convex portion 241 and the bottom surface of the first groove 2313 are connected to each other can reduce adverse effect on other components caused by the connection between the current collecting member 24 and the first terminal portion 231. In addition, by configuring the first weld mark 233 to surround the outer side of the first convex portion 241, the first weld mark 233 formed on the bottom surface of the first groove 2313 can be spaced apart from the current collecting member 24, thereby preventing the current collecting member 24 from contacting the first weld mark 233 in the thickness direction X of the wall portion.

In some embodiments, as shown in FIG. 7 and FIG. 8, along the thickness direction X of the wall portion, a second groove 242 is formed on a side of the current collecting member 24 facing the electrode assembly 22, at a position corresponding to the first convex portion 241.

By way of example, the first convex portion 241 provided on one side of the current collecting member 24 is a structure formed by a stamping process, so that the first convex portion 241 is formed on one side of the current collecting member 24, and the second groove 242 is formed on the side of the current collecting member 24 facing away from the first convex portion 241, at a position corresponding to the first convex portion 241. Certainly, the processing method of forming the first convex portion 241 on one side of the current collecting member 24 is not limited thereto, in other embodiments, the first convex portion 241 provided on one side of the current collecting member 24 may be formed by processing processes such as casting or milling.

By forming the second groove 242 on the side of the current collecting member 24 facing the electrode assembly 22, in a region corresponding to the first convex portion 241, the current collecting member 24 is a structure that can be formed by stamping, so that the first convex portion 241 and the second groove 242 are respectively formed on two sides of the current collecting member 24, which is beneficial to reducing the manufacturing difficulty of the current collecting member 24.

According to some embodiments of the present application, referring to FIG. 9 and FIG. 10, where FIG. 9 is a partial cross-sectional view of a battery cell 20 according to yet further embodiments of the present application, and FIG. 10 is a cross-sectional view of an electrode terminal 23 of a battery cell 20 according to yet further embodiments of the present application, the second terminal portion 232 can include a second limiting portion 2321 and a second protrusion 2322. Along the thickness direction X of the wall portion, the second limiting portion 2321 is located on the side of the wall portion 211 facing away from the electrode assembly 22, and the second limiting portion 2321 is configured to cooperate with the first terminal portion 231 to clamp the wall portion 211. The second protrusion 2322 is protrudingly formed on a side of the second limiting portion 2321 facing the electrode assembly 22, and the second protrusion 2322 is disposed in the mounting hole 2111 along the thickness direction X of the wall portion and connected to the first terminal portion 231.

The second limiting portion 2321 is located on the side of the wall portion 211 facing away from the electrode assembly 22, which means that the second limiting portion 2321 of the second terminal portion 232 is located on the side of the wall portion 211 facing away from the interior of the housing 21, so that the second limiting portion 2321 is located outside the housing 21.

The second protrusion 2322 is protrudingly formed on the side of the second limiting portion 2321 facing the electrode assembly 22, which means that the second protrusion 2322 is a structure extending and protruding from the side of the second limiting portion 2321 facing the electrode assembly 22 in a direction close to the electrode assembly 22.

The second protrusion 2322 is disposed in the mounting hole 2111 along the thickness direction X of the wall portion and connected to the first terminal portion 231, that is, the second protrusion 2322 is fitted into the mounting hole 2111 of the wall portion 211 and connected to the first terminal portion 231.

It should be noted that in the embodiment where the second terminal portion 232 is formed with the second protrusion 2322 and the second protrusion 2322 is disposed in the mounting hole 2111, the first terminal portion 231 may be a structure entirely located on the side of the wall portion 211 facing the electrode assembly 22, for example, the first terminal portion 231 is a plate-like structure. Certainly, the first terminal portion 231 can include the first limiting portion 2311 and the first protrusion 2312, and the first protrusion 2312 is connected to the second protrusion 2322.

The second terminal portion 232 is provided with a second limiting portion 2321 and a second protrusion 2322, and the second limiting portion 2321 is located on the side of the wall portion 211 facing away from the electrode assembly 22, so that the second limiting portion 2321 can cooperate with the first terminal portion 231 to clamp the wall portion 211. The second protrusion 2322 is protrudingly formed on the side of the second limiting portion 2321 facing the electrode assembly 22 and disposed in the mounting hole 2111, so that the second terminal portion 232 can be connected to the first terminal portion 231 through the second protrusion 2322 disposed in the mounting hole 2111, enabling the first terminal portion 231 and the second terminal portion 232 to be arranged along the thickness direction X of the wall portion and connected to each other, which is beneficial to reducing the difficulty of connecting the first terminal portion 231 and the second terminal portion 232 to each other.

In some embodiments, as shown in FIG. 9 and FIG. 10, along the thickness direction X of the wall portion, the first terminal portion 231 is entirely located on the side of the wall portion 211 facing the electrode assembly 22.

The first terminal portion 231 is entirely located on the side of the wall portion 211 facing the electrode assembly 22, that is, the first terminal portion 231 does not extend into the mounting hole 2111 of the wall portion 211, and the first terminal portion 231 is entirely located inside the housing 21. By way of example, in FIG. 10, the first terminal portion 231 has a plate-like structure.

By configuring the first terminal portion 231 to be entirely located on the side of the wall portion 211 facing the electrode assembly 22, assembly of the first terminal portion 231 is facilitated, and no protruding structure to be fitted into the mounting hole 2111 is required to be provided on the first terminal portion 231, which is beneficial to reducing the processing difficulty of the first terminal portion 231.

According to some embodiments of the present application, with continued reference to FIG. 9 and FIG. 10, along the thickness direction X of the wall portion, the first terminal portion 231 has a second surface 2314 facing away from the electrode assembly 22, and the second surface 2314 is connected to the second protrusion 2322.

The second surface 2314 is a surface of the first terminal portion 231 on the side facing away from the electrode assembly 22 in the thickness direction X of the wall portion, and the second surface 2314 is connected to the second protrusion 2322, which means that the second protrusion 2322 is directly connected to the surface of the first terminal portion 231 having a plate-like structure on the side facing away from the electrode assembly 22.

By connecting the second surface 2314 of the first terminal portion 231 facing away from the electrode assembly 22 to the second protrusion 2322, the second protrusion 2322 forms a structure connected to the surface on the side of the first terminal portion 231 facing away from the electrode assembly 22. This structure is simple and convenient for assembly, and no protruding structure to be fitted into the mounting hole 2111 is required to be provided on the first terminal portion 231, which is beneficial to reducing the processing difficulty of the first terminal portion 231.

In some embodiments, as shown in FIG. 10, the second surface 2314 is a continuous planar surface and perpendicular to the thickness direction X of the wall portion.

The second surface 2314 is a continuous planar surface, that is, the second surface 2314 is a complete and continuous planar surface, and no protrusion or groove structure is provided on the second surface 2314.

By configuring the second surface 2314 as a continuously planar structure perpendicular to the thickness direction X of the wall portion, the connection between the second protrusion 2322 of the second terminal portion 232 and the first terminal portion 231 is facilitated, thereby improving the connection quality between the second terminal portion 232 and the first terminal portion 231.

It should be noted that in the embodiment in which the first terminal portion 231 has a plate-like structure, the tab 221 of the electrode assembly 22 may be directly connected to the side of the first terminal portion 231 facing the electrode assembly 22. For example, the electrode assembly 22 has a tab 221, and along the thickness direction X of the wall portion, the tab 221 is connected to the side of the first terminal portion 231 facing the electrode assembly 22 to electrically connect the electrode assembly 22 and the first terminal portion 231.

By way of example, the tab 221 and the first terminal portion 231 may be directly connected by welding, or may be directly abutted, or the like.

Since the second surface 2314 of the first terminal portion 231 facing away from the electrode assembly 22 is a planar surface, the first terminal portion 231 can be configured as a plate-like structure, enabling the tab 221 of the electrode assembly 22 to be directly connected to the side of the first terminal portion 231 facing the electrode assembly 22 without the need for the current collecting member 24, which is beneficial to optimizing the production process and cycle time of the battery cell 20, thereby improving the production efficiency of the battery cell 20 and reducing production cost of the battery cell 20.

According to some embodiments of the present application, as shown in FIG. 9 and FIG. 10, along the thickness direction X of the wall portion, the first terminal portion 231 has a third surface 2315 facing the electrode assembly 22, and the third surface 2315 is provided with a third groove 2315a. The second protrusion 2322 and the second surface 2314 are connected by welding to form a first weld mark 233, and at least a part of the first weld mark 233 is formed on a bottom surface of the third groove 2315a.

The third surface 2315 is a surface of the first terminal portion 231 having a plate-like structure on the side facing the electrode assembly 22 in the thickness direction X of the wall portion.

The second protrusion 2322 and the second surface 2314 are connected by welding to forms the first weld mark 233, which means that the second protrusion 2322 of the second terminal portion 232 and the first terminal portion 231 are structures connected to each other by welding, and the first weld mark 233 is formed between the second protrusion 2322 of the second terminal portion 232 and the first terminal portion 231.

At least a part of the first weld mark 233 is formed on the bottom surface of the third groove 2315a, which means that the first weld mark 233 formed by mutual welding between the second protrusion 2322 of the second terminal portion 232 and the first terminal portion 231 extends to the bottom surface of the third groove 2315a, that is, the second protrusion 2322 of the second terminal portion 232 and the first terminal portion 231 are structures welded from a side of the bottom surface of the third groove 2315a.

By way of example, the second protrusion 2322 of the second terminal portion 232 and the first terminal portion 231 may be welded to each other by welding processes such as laser welding or ultrasonic welding.

By providing the third groove 2315a on the third surface 2315 of the first terminal portion 231 facing the electrode assembly 22, and forming at least a part of the first weld mark 233, created by welding between the second protrusion 2322 and the second surface 2314, on the bottom surface of the third groove 2315a, the first weld mark 233 is structured to extend into the third groove 2315a. A battery cell 20 with this structure allows welding assembly of the second protrusion 2322 and the second surface 2314 of the first terminal portion 231 from a side of the first terminal portion 231 provided with the third groove 2315a, so that welding connection between the first terminal portion 231 and the second terminal portion 232 is performed from a side of a thinned region in which the third groove 2315a is formed in the first terminal portion 231, and there is no need to extend through the second limiting portion 2321 and the second protrusion 2322 from a side of the second terminal portion 232 facing away from the electrode assembly 22 before welding to the first terminal portion 231, which is beneficial to reducing the difficulty of welding between the first terminal portion 231 and the second terminal portion 232, as well as the power required for the welding.

According to some embodiments of the present application, as shown in FIG. 9 and FIG. 10, the battery cell 20 may further include a current collecting member 24. The current collecting member 24 is disposed between the wall portion 211 and the electrode assembly 22, and the current collecting member 24 is connected to the first terminal portion 231 and the electrode assembly 22 to electrically connect the first terminal portion 231 and the electrode assembly 22. Along the thickness direction X of the wall portion, the current collecting member 24 is connected to the third surface 2315, and the current collecting member 24 is spaced apart from the bottom surface of the third groove 2315a.

The current collecting member 24 serves to connect the first terminal portion 231 of the electrode terminal 23 and the tab 221 of the electrode assembly 22 to achieve electrical connection between the electrode assembly 22 and the electrode terminal 23. The current collecting member 24 may be made of various materials, such as copper, iron, aluminum, steel, and aluminum alloy.

The current collecting member 24 is connected to the third surface 2315, and the current collecting member 24 is spaced apart from the bottom surface of the third groove 2315a, that is, the current collecting member 24 is connected to the surface of the first terminal portion 231 on the side facing the electrode assembly 22, such that the current collecting member 24 and the first weld mark 233 formed on the bottom surface of the third groove 2315a are spaced apart in the thickness direction X of the wall portion through the third groove 2315a and not in contact with each other.

The battery cell 20 is further provided with the current collecting member 24 through which the first terminal portion 231 and the electrode assembly 22 are connected to achieve electrical connection between the electrode assembly 22 and the electrode terminal 23, which is beneficial to reducing the connection difficulty between the electrode assembly 22 and the first terminal portion 231. In addition, by connecting the current collecting member 24 to the third surface 2315 of the first terminal provided with the third groove 2315a, the first weld mark 233 formed on the bottom surface of the third groove 2315a can be spaced apart from the current collecting member 24 in the thickness direction X of the wall portion through the third groove 2315a, so that the third groove 2315a further serves to provide clearance for the current collecting member 24 relative to the first weld mark 233. As a result, the current collecting member 24 and the first weld mark 233 are spaced apart in the thickness direction X of the wall portion, so that the current collecting member 24 can be prevented from contacting the first weld mark 233 in the thickness direction X of the wall portion, thereby reducing interference of the first weld mark 233 with the current collecting member 24, which is beneficial to improving the connection quality between the current collecting member 24 and the first terminal portion 231.

In some embodiments, as shown in FIG. 10, along the thickness direction X of the wall portion, a groove depth of the third groove 2315a is H₂, satisfying 0.1 mm ≤ H₂ ≤ 0.5 mm.

By way of example, the groove depth H₂ of the third groove 2315a may be 0.1 mm, 0.15 mm, 0.2 mm, 0.25 mm, 0.3 mm, 0.35 mm, 0.4 mm, 0.45 mm, 0.5 mm, or the like.

By setting the groove depth of the third groove 2315a in the thickness direction X of the wall portion to be greater than or equal to 0.1 mm, the clearance effect of the third groove 2315a on the first weld mark 233 is improved, thereby alleviating interference of the first weld mark 233 with the connection between the current collecting member 24 and the third surface 2315 of the first terminal portion 231, which is beneficial to improving the connection quality between the current collecting member 24 and the first terminal portion 231. By setting the groove depth of the third groove 2315a in the thickness direction X of the wall portion to be less than or equal to 0.5 mm, the phenomenon of excessive waste of the third groove 2315a is reduced, which can improve the overall structural strength of the first terminal portion 231 and reduce the processing difficulty of the third groove 2315a to improve the processing efficiency of the first terminal portion 231.

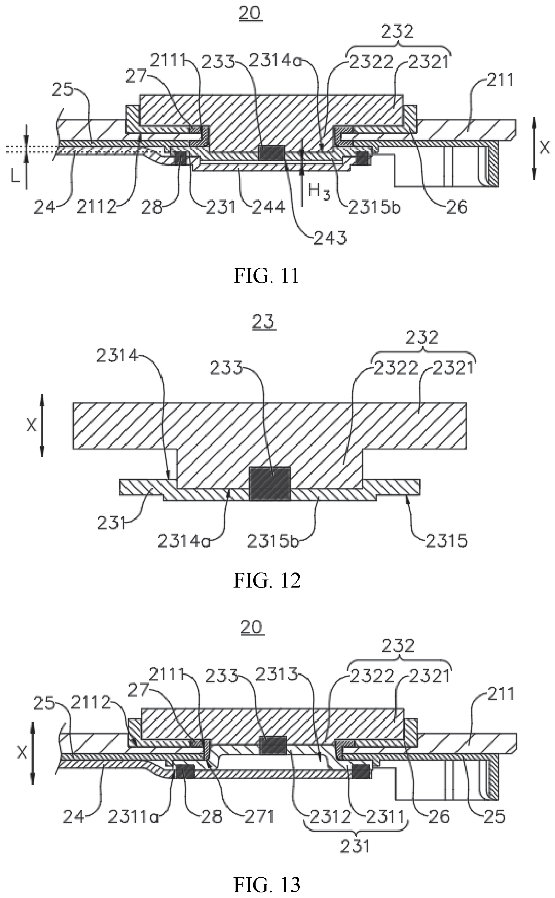

According to some embodiments of the present application, referring to FIG. 11 and FIG. 12, where FIG. 11 is a partial cross-sectional view of a battery cell 20 according to other embodiments of the present application, and FIG. 12 is a cross-sectional view of an electrode terminal 23 of a battery cell 20 according to other embodiments of the present application, along the thickness direction X of the wall portion, the first terminal portion 231 has a second surface 2314 facing away from the electrode assembly 22, the second surface 2314 is provided with a fourth groove 2314a, and the second protrusion 2322 is fitted into the fourth groove 2314a and connected to a bottom surface of the fourth groove 2314a.

The second surface 2314 is a surface of the first terminal portion 231 on the side facing away from the electrode assembly 22 in the thickness direction X of the wall portion.

The second protrusion 2322 is fitted into the fourth groove 2314a and connected to the bottom surface of the fourth groove 2314a, which means that the second protrusion 2322 of the second terminal portion 232 extends into the fourth groove 2314a of the first terminal portion 231 and is connected to the bottom surface of the fourth groove 2314a.

By providing the fourth groove 2314a on the second surface 2314 of the first terminal portion 231 facing away from the electrode assembly 22, with the second protrusion 2322 fitted into the fourth groove 2314a and connected to the bottom surface of the fourth groove 2314a, this structure provides a positioning effect for the assembly of the first terminal portion 231 and the second terminal portion 232, which is beneficial to improving the assembly accuracy between the first terminal portion 231 and the second terminal portion 232 and reducing the assembly difficulty therebetween.

According to some embodiments of the present application, with continued reference to FIG. 11 and FIG. 12, the second protrusion 2322 and the bottom surface of the fourth groove 2314a are connected by welding to form a first weld mark 233, and the first weld mark 233 extends to a side of the first terminal portion 231 facing the electrode assembly 22.

The second protrusion 2322 and the bottom surface of the fourth groove 2314a are connected by welding to form the first weld mark 233, which means that the second protrusion 2322 of the second terminal portion 232 and the bottom surface of the fourth groove 2314a of the first terminal portion 231 are structures connected to each other by welding, and the first weld mark 233 is formed between the second protrusion 2322 of the second terminal portion 232 and the first terminal portion 231.

The first weld mark 233 extends to the side of the first terminal portion 231 facing the electrode assembly 22, which means that the first weld mark 233 formed by mutual welding between the second protrusion 2322 of the second terminal portion 232 and the bottom surface of the fourth groove 2314a extends to the side of the first terminal portion 231 facing the electrode assembly 22 in the thickness direction X of the wall portion, that is, the second protrusion 2322 of the second terminal portion 232 and the first terminal portion 231 are structures welded from the side of the first terminal portion 231 facing the electrode assembly 22.

By way of example, the second protrusion 2322 of the second terminal portion 232 and the bottom surface of the fourth groove 2314a of the first terminal portion 231 may be welded to each other by welding processes such as laser welding or ultrasonic welding.

The second protrusion 2322 and the bottom surface of the fourth groove 2314a are connected by welding, and the first weld mark 233 formed by welding connection between the second protrusion 2322 and the bottom surface of the fourth groove 2314a extends to the side of the first terminal portion 231 facing the electrode assembly 22. A battery cell 20 with this structure allows welding assembly of the second protrusion 2322 and the bottom surface of the fourth groove 2314a from the side of the first terminal portion 231 facing the electrode assembly 22, and there is no need to extend through the second limiting portion 2321 and the second protrusion 2322 from a side of the second terminal portion 232 facing away from the electrode assembly 22 before welding to the first terminal portion 231, which is beneficial to reducing the difficulty of welding between the first terminal portion 231 and the second terminal portion 232, as well as the power required for the welding.

According to some embodiments of the present application, as shown in FIG. 11 and FIG. 12, the battery cell 20 may further include a current collecting member 24. The current collecting member 24 is disposed between the wall portion 211 and the electrode assembly 22, and the current collecting member 24 is connected to the first terminal portion 231 and the electrode assembly 22 to electrically connect the first terminal portion 231 and the electrode assembly 22. Along the thickness direction X of the wall portion, the first terminal portion 231 has a third surface 2315 facing the electrode assembly 22, the current collecting member 24 is connected to the third surface 2315, and a second avoidance groove 243 for providing clearance for the first weld mark 233 is provided on a side of the current collecting member 24 facing away from the electrode assembly 22.

The current collecting member 24 serves to connect the first terminal portion 231 of the electrode terminal 23 and the tab 221 of the electrode assembly 22 to achieve electrical connection between the electrode assembly 22 and the electrode terminal 23. The current collecting member 24 may be made of various materials, such as copper, iron, aluminum, steel, and aluminum alloy.

The current collecting member 24 is connected to the third surface 2315, that is, the current collecting member 24 is connected to the surface of the first terminal portion 231 on the side facing the electrode assembly 22.

The second avoidance groove 243 for providing clearance for the first weld mark 233 is provided on the side of the current collecting member 24 facing away from the electrode assembly 22, that is, the current collecting member 24 is provided with the second avoidance groove 243 on the side facing away from the electrode assembly 22 in the thickness direction X of the wall portion, and the first weld mark 233 is accommodated in the second avoidance groove 243, so that the first weld mark 233 can be spaced apart from the current collecting member 24 and not in contact with each other.

The first terminal portion 231 and the electrode assembly 22 are connected through the current collecting member 24 to achieve electrical connection between the electrode assembly 22 and the electrode terminal 23, which is beneficial to reducing the connection difficulty between the electrode assembly 22 and the first terminal portion 231. In addition, by connecting the current collecting member 24 to the third surface 2315 of the first terminal portion 231 facing the electrode assembly 22, and providing the second avoidance groove 243 for providing clearance for the first weld mark 233 on the side of the current collecting member 24 facing away from the electrode assembly 22, the first weld mark 233 formed on the side of the first terminal portion 231 facing the electrode assembly 22 can be spaced apart from the current collecting member 24 in the thickness direction X of the wall portion through the second avoidance groove 243. As a result, the current collecting member 24 and the first weld mark 233 do not contact each other in the thickness direction X of the wall portion, thereby reducing interference of the first weld mark 233 with the current collecting member 24, which is beneficial to improving the connection quality between the current collecting member 24 and the third surface 2315 of the first terminal portion 231.

According to some embodiments of the present application, with continued reference to FIG. 11 and FIG. 12, a third protrusion 2315b is protrudingly formed on the third surface 2315, and the first weld mark 233 extends to an end of the third protrusion 2315b facing the electrode assembly 22. Along the thickness direction X of the wall portion, the third protrusion 2315b is fitted into the second avoidance groove 243, and the third protrusion 2315b is spaced apart from a bottom surface of the second avoidance groove 243.

The third protrusion 2315b is protrudingly formed on the third surface 2315, which means that the third protrusion 2315b is formed on the third surface 2315 of the first terminal portion 231 facing the electrode assembly 22, that is, the third protrusion 2315b is a structure protruding from the third surface 2315 of the first terminal portion 231 in a direction close to the electrode assembly 22.

Optionally, the third protrusion 2315b is provided corresponding to the fourth groove 2314a of the first terminal portion 231 in the thickness direction X of the wall portion, such that the first terminal portion 231 is a structure that can be formed by a stamping process, the fourth groove 2314a is formed on the second surface 2314 of the first terminal portion 231 facing away from the electrode assembly 22, and the third protrusion 2315b is formed on the third surface 2315 of the first terminal portion 231 facing the electrode assembly 22.

It should be noted that in the embodiment in which the third protrusion 2315b is formed on the third surface 2315 of the first terminal portion 231 facing the electrode assembly 22, the first weld mark 233 formed by welding connection between the bottom surface of the fourth groove 2314a of the first terminal portion 231 and the second protrusion 2322 of the second terminal portion 232 extends to the side of the third protrusion 2315b facing the electrode assembly 22, such that the first terminal portion 231 and the second terminal portion 232 are connected by welding from the side of the third protrusion 2315b facing the electrode assembly 22.

The third protrusion 2315b is fitted into the second avoidance groove 243, and the third protrusion 2315b is spaced apart from the bottom surface of the second avoidance groove 243, that is, the third protrusion 2315b of the first terminal portion 231 extends into the second avoidance groove 243 of the current collecting member 24 in the thickness direction X of the wall portion, and is spaced apart from the bottom surface of the second avoidance groove 243, such that the first weld mark 233 extending to the side of the third protrusion 2315b facing the electrode assembly 22 can be spaced apart from the current collecting member 24 in the thickness direction X of the wall portion and not in contact with each other.

By protrudingly forming the third protrusion 2315b fitted into the second avoidance groove 243 of the current collecting member 24 on the third surface 2315 of the first terminal portion 231, with the third protrusion 2315b spaced apart from the bottom surface of the second avoidance groove 243 in the thickness direction X of the wall portion, cooperation between the third protrusion 2315b and the second avoidance groove 243 provides a positioning effect for the current collecting member 24 and the first terminal portion 231, while the first weld mark 233 extending onto the third protrusion 2315b is spaced apart from the current collecting member 24 in the thickness direction X of the wall portion, which is beneficial to improving the assembly accuracy between the current collecting member 24 and the first terminal portion 231.

In some embodiments, as shown in FIG. 11, along the thickness direction X of the wall portion, a distance between the third protrusion 2315b and the bottom surface of the second avoidance groove 243 is H₃, satisfying 0.1 mm ≤ H₃ ≤ 0.5 mm.

By way of example, the distance H₃ between the third protrusion 2315b and the bottom surface of the second avoidance groove 243 may be 0.1 mm, 0.15 mm, 0.2 mm, 0.25 mm, 0.3 mm, 0.35 mm, 0.4 mm, 0.45 mm, 0.5 mm, or the like.

By setting the distance between the third protrusion 2315b and the bottom surface of the second avoidance groove 243 to be greater than or equal to 0.1 mm, the clearance effect of the second avoidance groove 243 on the first weld mark 233 is improved, thereby alleviating interference of the first weld mark 233 with the connection between the current collecting member 24 and the first terminal portion 231, which is beneficial to improving the connection quality between the current collecting member 24 and the first terminal portion 231. By setting the distance between the third protrusion 2315b and the bottom surface of the second avoidance groove 243 to be less than or equal to 0.5 mm, space occupied by the current collecting member 24 and the first terminal portion 231 in the thickness direction X of the wall portion can be optimized, and the phenomenon of excessive waste of the second avoidance groove 243 can be reduced, which can improve the structural strength of the current collecting member 24 and reduce the processing difficulty of the second avoidance groove 243 to improve the processing efficiency of the current collecting member 24.

According to some embodiments of the present application, with continued reference to FIG. 11, along the thickness direction X of the wall portion, a second convex portion 244 is formed on a side of the current collecting member 24 facing the electrode assembly 22, at a position corresponding to the second avoidance groove 243.

By way of example, the second avoidance groove 243 provided on one side of the current collecting member 24 is a structure formed by a stamping process, so that the second avoidance groove 243 is formed on one side of the current collecting member 24, and the second convex portion 244 is formed on the side of the current collecting member 24 facing away from the second avoidance groove 243 and at a position corresponding to the second avoidance groove 243. Certainly, the processing method of forming the second avoidance groove 243 on one side of the current collecting member 24 is not limited thereto, in other embodiments, the second avoidance groove 243 provided on one side of the current collecting member 24 may be formed by processing processes such as laser etching, engraving, or casting.

By forming the second convex portion 244 on the side of the current collecting member 24 facing the electrode assembly 22, in a region corresponding to the second avoidance groove 243, the current collecting member 24 is a structure that can be formed by stamping, so that the second avoidance groove 243 and the second convex portion 244 are respectively formed on two sides of the current collecting member 24, which is beneficial to reducing the manufacturing difficulty of the current collecting member 24.

According to some embodiments of the present application, as shown in FIG. 6, FIG. 10, and FIG. 12, the first terminal portion 231 and the second terminal portion 232 are connected by welding.

The first terminal portion 231 and the second terminal portion 232 are connected by welding to form a first weld mark 233, and the first weld mark 233 passes through a contact surface between the first terminal portion 231 and the second terminal portion 232.

Optionally, the first terminal portion 231 and the second terminal portion 232 may be welded to each other by welding processes such as laser welding or ultrasonic welding.

By configuring the first terminal portion 231 and the second terminal portion 232 to be welded to each other, it is beneficial to improving the connection strength between the first terminal portion 231 and the second terminal portion 232 to improve the structural stability of the electrode terminal 23 assembled on the wall portion 211. In addition, the structure in which the first terminal portion 231 and the second terminal portion 232 are connected by welding can replace assembling the electrode terminal 23 on the wall portion 211 through a riveting process, thereby allowing increase of radial dimensions of the separately provided first terminal portion 231 and second terminal portion 232 according to actual needs, which is beneficial to improving the structural strength of the first terminal portion 231 and the second terminal portion 232.

According to some embodiments of the present application, as shown in FIG. 5, FIG. 9, and FIG. 11, the first terminal portion 231 has a first limiting portion 2311, and along the thickness direction X of the wall portion, the first limiting portion 2311 is located on the side of the wall portion 211 facing the electrode assembly 22, and the first limiting portion 2311 is configured to cooperate with the second terminal portion 232 to clamp the wall portion 211 to restrict the electrode terminal 23 from detaching from the wall portion 211 along the thickness direction X of the wall portion. The battery cell 20 may further include a current collecting member 24, the current collecting member 24 is disposed between the wall portion 211 and the electrode assembly 22, and the current collecting member 24 connects the electrode assembly 22 and the first limiting portion 2311.

The first limiting portion 2311 is located on the side of the wall portion 211 facing the electrode assembly 22, that is, the first limiting portion 2311 overlaps with at least a part of the wall portion 211 in the thickness direction X of the wall portion, such that the first limiting portion 2311 and the second terminal portion 232 can cooperatively clamp the wall portion 211 to assemble the electrode terminal 23 onto the wall portion 211.

The current collecting member 24 connects the electrode assembly 22 and the first limiting portion 2311, which means that at least a part of the current collecting member 24 is located between the first limiting portion 2311 and the electrode assembly 22, and the current collecting member 24 electrically connects the electrode terminal 23 and the electrode assembly 22 by connecting the first limiting portion 2311 and the electrode assembly 22. By way of example, the current collecting member 24 and the first limiting portion 2311 may be connected by welding, or may be abutted, or the like.

The first terminal portion 231 is provided with the first limiting portion 2311, and the first limiting portion 2311 is located on the side of the wall portion 211 facing the electrode assembly 22, so that the first limiting portion 2311 can cooperate with the second terminal portion 232 to clamp the wall portion 211. The battery cell 20 is further provided with the current collecting member 24, and electrical connection between the electrode assembly 22 and the electrode terminal 23 can be achieved through the current collecting member 24 connecting the first limiting portion 2311 of the first terminal portion 231 and the electrode assembly 22. With this structure, the difficulty of establishing electrical connection between the electrode assembly 22 and the electrode terminal 23 can be reduced, and the assembly difficulty between the current collecting member 24 and the first terminal portion 231 can be reduced.

In some embodiments, with continued reference to FIG. 5, FIG. 9, and FIG. 11, the first terminal portion 231 and the second terminal portion 232 are connected by welding, and the current collecting member 24 is welded to the first limiting portion 2311. Along the thickness direction X of the wall portion, a thickness of the first limiting portion 2311 is greater than a thickness of a region in which the first terminal portion 231 and the second terminal portion 232 are connected by welding.

The thickness of the first limiting portion 2311 is greater than the thickness of the region in which the first terminal portion 231 and the second terminal portion 232 are connected by welding, that is, the thickness of the first limiting portion 2311 in the thickness direction X of the wall portion is greater than the thickness of a part of the first terminal portion 231 used for welding to the second terminal portion 232 in the thickness direction X of the wall portion.

Since the first limiting portion 2311 is located on the side of the wall portion 211 facing the electrode assembly 22, setting the thickness of the first limiting portion 2311 to be greater than the thickness of the region in which the first terminal portion 231 and the second terminal portion 232 are connected by welding enables the first terminal portion 231 to be a structure thickened in a region corresponding to the first limiting portion 2311. This alleviates the phenomenon of burn-through of the first limiting portion 2311 during welding between the current collecting member 24 and the first limiting portion 2311, thereby reducing adverse effect on the wall portion 211 of the battery cell 20 or other components during welding between the current collecting member 24 and the first limiting portion 2311.

According to some embodiments of the present application, as shown in FIG. 5, FIG. 9, and FIG. 11, the current collecting member 24 and the first limiting portion 2311 are connected by welding to form a second weld mark 28. The battery cell 20 may further include a sealing member 27, where the sealing member 27 is disposed between the wall portion 211 and the electrode terminal 23, and at least a part of the sealing member 27 is located within the mounting hole 2111 to seal a gap between the electrode terminal 23 and a wall surface of the mounting hole 2111, along the thickness direction X of the wall portion, the sealing member 27 has an abutting surface 271, and the abutting surface 271 abuts against a side of the first limiting portion 2311 facing away from the electrode assembly 22. A projection of the second weld mark 28 in the thickness direction X of the wall portion does not overlap with the abutting surface 271.

The current collecting member 24 is connected to the first limiting portion 2311 by welding to form the second weld mark 28, which means that the current collecting member 24 and the first limiting portion 2311 are structures connected by welding, and the second weld mark 28 is formed between the current collecting member 24 and the first limiting portion 2311.

By way of example, the second weld mark 28 extends along the thickness direction X of the wall portion to a side of the current collecting member 24 facing the electrode assembly 22, such that the current collecting member 24 and the first limiting portion 2311 are connected by welding from the side of the current collecting member 24 facing the electrode assembly 22.

The sealing member 27 serves to seal the gap between the electrode terminal 23 and the wall surface of the mounting hole 2111 of the wall portion 211. The sealing member 27 is disposed between the wall portion 211 and the electrode terminal 23, and at least a part of the sealing member 27 is located within the mounting hole 2111, such that the sealing member 27 can seal the electrode terminal 23 and the wall surface of the mounting hole 2111 of the wall portion 211.

The sealing member 27 has the abutting surface 271, and the abutting surface 271 abuts against the side of the first limiting portion 2311 facing away from the electrode assembly 22, which means that the sealing member 27 abuts against the side of the first limiting portion 2311 facing away from the electrode assembly 22 along the thickness direction X of the wall portion, and a surface of the sealing member 27 abutting against the first limiting portion 2311 is the abutting surface 271.

The projection of the second weld mark 28 in the thickness direction X of the wall portion does not overlap with the abutting surface 271, which means that the second weld mark 28 formed by welding connection between the current collecting member 24 and the first limiting portion 2311 does not overlap with the abutting surface 271 on which the sealing member 27 abuts against the second limiting portion 2321 in the thickness direction X of the wall portion, that is, the first weld mark 233 and the abutting surface 271 are structures offset in the thickness direction X of the wall portion.

By way of example, in FIG. 5, FIG. 9, and FIG. 11, the sealing member 27 includes a first part, a second part, and a third part sequentially connected. The first part is located between the second limiting portion 2321 of the second terminal portion 232 and the wall portion 211 along the thickness direction X of the wall portion, the second part is located between the wall surface of the mounting hole 2111 and the electrode terminal 23, and the third part is located between the first limiting portion 2311 of the first terminal portion 231 and the wall portion 211 along the thickness direction X of the wall portion, such that the sealing member 27 forms a "C"-shaped structure, where the third part abuts against the side of the first limiting portion 2311 facing away from the electrode assembly 22, such that a surface of the third part on the side facing the electrode assembly 22 is the abutting surface 271.

Certainly, in other embodiments, the sealing member 27 may be of other structures. Referring to FIG. 13, where FIG. 13 is a partial cross-sectional view of a battery cell 20 according to still further embodiments of the present application, the sealing member 27 only includes a first part and a second part sequentially connected. The first part is located between the second limiting portion 2321 of the second terminal portion 232 and the wall portion 211 along the thickness direction X of the wall portion, and the second part is located between the wall surface of the mounting hole 2111 and the electrode terminal 23, such that the sealing member 27 forms an "L"-shaped structure, where the second part abuts against the side of the first limiting portion 2311 facing away from the electrode assembly 22, such that an end surface of an end of the second part facing the electrode assembly 22 is the abutting surface 271.

By configuring the second weld mark 28 formed by welding connection between the current collecting member 24 and the first limiting portion 2311 such that its projection in the thickness direction X of the wall portion does not overlap with the abutting surface 271 of the sealing member 27, the second weld mark 28 and an abutting surface of the sealing member 27 abutting against the first limiting portion 2311 are structures offset in the thickness direction X of the wall portion, thereby reducing adverse effect on the sealing member 27 during welding between the current collecting member 24 and the first limiting portion 2311, which is beneficial to alleviating the phenomenon of the sealing member 27 being burned, thereby effectively improving the sealing effectiveness of the sealing member 27 on the electrode terminal 23 and the wall surface of the mounting hole 2111.

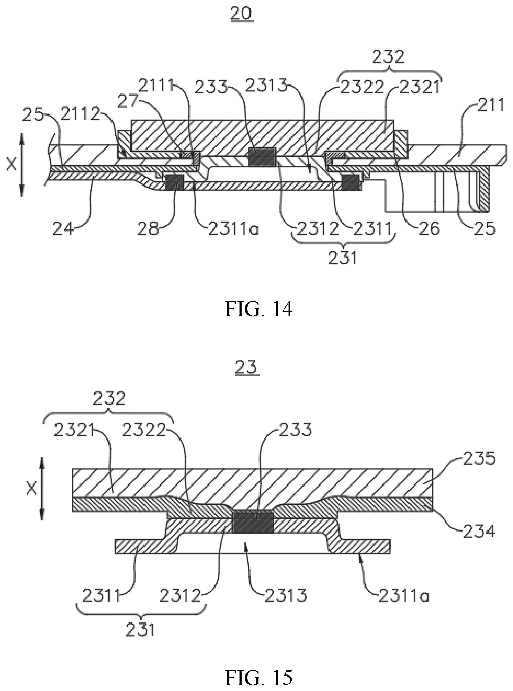

According to some embodiments of the present application, referring to FIG. 14, where FIG. 14 is a partial cross-sectional view of a battery cell 20 according to yet additional embodiments of the present application, the current collecting member 24 is welded to the first limiting portion 2311. The battery cell 20 may further include a sealing member 27, where the sealing member 27 is disposed between the wall portion 211 and the electrode terminal 23, and at least a part of the sealing member 27 is located within the mounting hole 2111 to seal a gap between the electrode terminal 23 and a wall surface of the mounting hole 2111. Along the thickness direction X of the wall portion, the sealing member 27 is spaced apart from the first limiting portion 2311.

The current collecting member 24 and the first limiting portion 2311 are connected by welding to form a second weld mark 28, that is, the current collecting member 24 and the first limiting portion 2311 are structures connected by welding, and the second weld mark 28 is formed between the current collecting member 24 and the first limiting portion 2311.

By way of example, the second weld mark 28 extends along the thickness direction X of the wall portion to a side of the current collecting member 24 facing the electrode assembly 22, such that the current collecting member 24 and the first limiting portion 2311 are connected by welding from the side of the current collecting member 24 facing the electrode assembly 22.

The sealing member 27 serves to seal the gap between the electrode terminal 23 and the wall surface of the mounting hole 2111 of the wall portion 211, the sealing member 27 is disposed between the wall portion 211 and the electrode terminal 23, and at least a part of the sealing member 27 is located within the mounting hole 2111, such that the sealing member 27 can seal the electrode terminal 23 and the wall surface of the mounting hole 2111 of the wall portion 211.

Along the thickness direction X of the wall portion, the sealing member 27 is spaced apart from the first limiting portion 2311, which means that the sealing member 27 and the first limiting portion 2311 are spaced apart in the thickness direction X of the wall portion, such that the sealing member 27 and the first limiting portion 2311 are not in contact with each other, thereby causing the sealing member 27 to be spaced apart from the first weld mark 233 along the thickness direction X of the wall portion.

By way of example, in FIG. 14, the sealing member 27 includes a first part and a second part sequentially connected, the first part is located between the second limiting portion 2321 of the second terminal portion 232 and the wall portion 211 along the thickness direction X of the wall portion, and the second part is located between the wall surface of the mounting hole 2111 and the electrode terminal 23, such that the sealing member 27 forms an "L"-shaped structure, where the second part is spaced apart from the second limiting portion 2321 in the thickness direction X of the wall portion.

By spacing the first limiting portion 2311 and the sealing member 27 apart in the thickness direction X of the wall portion, adverse effect on the sealing member 27 during welding between the current collecting member 24 and the first limiting portion 2311 can be reduced, which is beneficial to alleviating the phenomenon of the sealing member 27 being burned, thereby effectively improving the sealing effectiveness of the sealing member 27 on the electrode terminal 23 and the wall surface of the mounting hole 2111.

In some embodiments, with continued reference to FIG. 14, the battery cell 20 may further include a first insulating member 25. Along the thickness direction X of the wall portion, at least a part of the first insulating member 25 is located between the first limiting portion 2311 and the wall portion 211 to insulate and isolate the first limiting portion 2311 from the wall portion 211. The first insulating member 25 extends between the sealing member 27 and the first limiting portion 2311 to separate the sealing member 27 from the first limiting portion 2311.

At least a part of the first insulating member 25 is located between the first limiting portion 2311 and the wall portion 211, which means that the first insulating member 25 extends between the first limiting portion 2311 and the wall portion 211, such that the wall portion 211 and the first limiting portion 2311 are separated by the first insulating member 25, thereby achieving insulation and isolation between the wall portion 211 and the first limiting portion 2311.

The first insulating member 25 extends between the sealing member 27 and the first limiting portion 2311 to separate the sealing member 27 from the first limiting portion 2311, that is, a part of the first insulating member 25 is located between the first limiting portion 2311 and the first limiting portion 2311 in the thickness direction X of the wall portion, such that the first limiting portion 2311 and the sealing member 27 are respectively located on two sides of the first insulating member 25. By way of example, a part of the first insulating member 25 extends between the first limiting portion 2311 and the second part of the sealing member 27.

The battery cell 20 is further provided with the first insulating member 25 for insulating and isolating the first limiting portion 2311 from the wall portion 211, to reduce short circuit risk between the first limiting portion 2311 and the wall portion 211, and by configuring the first insulating member 25 to extend between the sealing member 27 and the first limiting portion 2311, the first insulating member 25 can separate the sealing member 27 from the first limiting portion 2311, so that the sealing member 27 and the first limiting portion 2311 are respectively located on two sides of the first insulating member 25 in the thickness direction X of the wall portion, thereby further reducing adverse effect on the sealing member 27 during welding between the current collecting member 24 and the first limiting portion 2311, which is beneficial to further alleviating the phenomenon of the sealing member 27 being burned.

According to some embodiments of the present application, as shown in FIG. 11, the current collecting member 24 and the first limiting portion 2311 are connected by welding to form a second weld mark 28. The battery cell 20 may further include a sealing member 27, the sealing member 27 is disposed between the wall portion 211 and the electrode terminal 23, at least a part of the sealing member 27 is located within the mounting hole 2111 to seal a gap between the electrode terminal 23 and a wall surface of the mounting hole 2111, and along the thickness direction X of the wall portion, the sealing member 27 abuts against a side of the first limiting portion 2311 facing away from the electrode assembly 22, where along the thickness direction X of the wall portion, a distance between the second weld mark 28 and the sealing member 27 is L, satisfying 0.1 mm ≤ L < 1.3 mm.

By way of example, the distance L between the second weld mark 28 and the sealing member 27 may be 0.1 mm, 0.15 mm, 0.2 mm, 0.25 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, or the like.

By setting a distance in the thickness direction X of the wall portion from the second weld mark 28 formed by welding between the first limiting portion 2311 and the current collecting member 24 to the sealing member 27 to be greater than or equal to 0.1 mm, so as to reduce adverse effect on the sealing member 27 during welding between the current collecting member 24 and the first limiting portion 2311, it is beneficial to alleviating the phenomenon of the sealing member 27 being burned, thereby effectively improving the sealing effectiveness of the sealing member 27 on the electrode terminal 23 and the wall surface of the mounting hole 2111. By setting the distance in the thickness direction X of the wall portion from the second weld mark 28 formed by welding between the first limiting portion 2311 and the current collecting member 24 to the sealing member 27 to be less than or equal to 1.3 mm, the phenomenon of excessive distance between the second weld mark 28 and the sealing member 27 causing excessive space occupied by the second weld mark 28 and the sealing member 27 is reduced, which is beneficial to improving the energy density of the battery cell 20 and reducing the assembly difficulty of the sealing member 27.

According to some embodiments of the present application, as shown in FIG. 6 and FIG. 10, along a direction perpendicular to the thickness direction X of the wall portion, the first terminal portion 231 and the second terminal portion 232 do not overlap. That is, in a radial direction of the electrode terminal 23, the first terminal portion 231 and the second terminal portion 232 do not overlap.

By configuring the first terminal portion 231 and the second terminal portion 232 not to overlap in the direction perpendicular to the thickness direction X of the wall portion, the first terminal portion 231 and the second terminal portion 232 are structures arranged along the thickness direction X of the wall portion and not embedded in each other, thereby facilitating connection between the first terminal portion 231 and the second terminal portion 232, and optimizing the overall weight of the electrode terminal 23 to improve the energy density of the battery cell 20.

According to some embodiments of the present application, as shown in FIG. 5 and FIG. 6, the first terminal portion 231 has a first limiting portion 2311, and the second terminal portion 232 has a second limiting portion 2321. Along the thickness direction X of the wall portion, the first limiting portion 2311 is located on the side of the wall portion 211 facing the electrode assembly 22, the second limiting portion 2321 is located on the side of the wall portion 211 facing away from the electrode assembly 22, and the first limiting portion 2311 and the second limiting portion 2321 are configured to cooperatively clamp the wall portion 211.

The first limiting portion 2311 is located on the side of the wall portion 211 facing the electrode assembly 22, and the second limiting portion 2321 is located on the side of the wall portion 211 facing away from the electrode assembly 22, that is, the first limiting portion 2311 and the second limiting portion 2321 are respectively located on two sides of the wall portion 211 in the thickness direction X of the wall portion, and the first limiting portion 2311 and the second limiting portion 2321 overlap with at least a part of the wall portion 211, such that the first limiting portion 2311 and the second limiting portion 2321 can cooperatively clamp the wall portion 211 to assemble the electrode terminal 23 onto the wall portion 211.

It should be noted that, as shown in FIG. 9 and FIG. 11, in the embodiments in which the first terminal portion 231 is entirely located on the side of the wall portion 211 facing the electrode assembly 22, a region of the first terminal portion 231 located on the side of the wall portion 211 facing the electrode assembly 22 and overlapping with the wall portion 211 is the first limiting portion 2311.

The first terminal portion 231 has the first limiting portion 2311 located on the side of the wall portion 211 facing the electrode assembly 22, and the second terminal portion 232 has the second limiting portion 2321 located on the side of the wall portion 211 facing away from the electrode assembly 22, such that at least a part of the wall portion 211 is located between the first limiting portion 2311 and the second limiting portion 2321, enabling the first limiting portion 2311 and the second limiting portion 2321 to cooperatively clamp the wall portion 211. With this structure, the first terminal portion 231 and the second terminal portion 232 can cooperatively clamp the wall portion 211 to restrict the electrode terminal 23 from detaching from the wall portion 211 along the thickness direction X of the wall portion. Such a structure is simple and convenient for assembly.

According to some embodiments of the present application, as shown in FIG. 5, FIG. 9, and FIG. 11, the battery cell 20 may further include a first insulating member 25. Along the thickness direction X of the wall portion, at least a part of the first insulating member 25 is located between the first limiting portion 2311 and the wall portion 211 to insulate and isolate the first limiting portion 2311 from the wall portion 211.

At least a part of the first insulating member 25 is located between the first limiting portion 2311 and the wall portion 211, which means that the first insulating member 25 extends between the first limiting portion 2311 and the wall portion 211, so that the first limiting portion 2311 and the wall portion 211 are insulated and isolated from each other through the first insulating member 25.

The battery cell 20 is further provided with the first insulating member 25, and at least a part of the first insulating member 25 is located between the first limiting portion 2311 and the wall portion 211, such that the first insulating member 25 can serve to insulate and isolate the first limiting portion 2311 from the wall portion 211, thereby reducing short circuit risk between the first limiting portion 2311 and the wall portion 211, which is beneficial to improving the usage reliability of the battery cell 20.

According to some embodiments of the present application, with continued reference to FIG. 5, FIG. 9, and FIG. 11, the battery cell 20 may further include a second insulating member 26. Along the thickness direction X of the wall portion, at least a part of the second insulating member 26 is located between the second limiting portion 2321 and the wall portion 211 to insulate and isolate the second limiting portion 2321 from the wall portion 211.

At least a part of the second insulating member 26 is located between the second limiting portion 2321 and the wall portion 211, which means that the second insulating member 26 extends between the second limiting portion 2321 and the wall portion 211, so that the second limiting portion 2321 and the wall portion 211 are insulated and isolated through the second insulating member 26.

The battery cell 20 is further provided with the second insulating member 26, and at least a part of the second insulating member 26 is located between the second limiting portion 2321 and the wall portion 211, such that the second insulating member 26 can insulate and isolate the second limiting portion 2321 from the wall portion 211, thereby reducing short circuit risk between the second limiting portion 2321 and the wall portion 211, which is beneficial to improving the usage reliability of the battery cell 20.

In some embodiments, as shown in FIG. 4, FIG. 5, FIG. 7, FIG. 9, and FIG. 11, along the thickness direction X of the wall portion, an accommodation groove 2112 is provided on a side of the wall portion 211 facing away from the electrode assembly 22, the mounting hole 2111 is provided on a bottom surface of the accommodation groove 2112, and at least a part of the second insulating member 26 is accommodated in the accommodation groove 2112.

By way of example, a part of the second insulating member 26 is accommodated in the accommodation groove 2112. Certainly, in other embodiments, the second insulating member 26 may be entirely located within the accommodation groove 2112.

By providing, on the side of the wall portion 211 facing away from the electrode assembly 22, the accommodation groove 2112 configured to accommodate the second insulating member 26, to facilitate assembly of the second insulating member 26 between the second limiting portion 2321 and the wall portion 211, the accommodation groove 2112 can provide assembly positioning for the second insulating member 26, which is beneficial to reducing the assembly difficulty of the second insulating member 26 and providing a certain degree of protection for the second insulating member 26, to reduce occurrence of wear, damage, or the like of the second insulating member 26 during use.

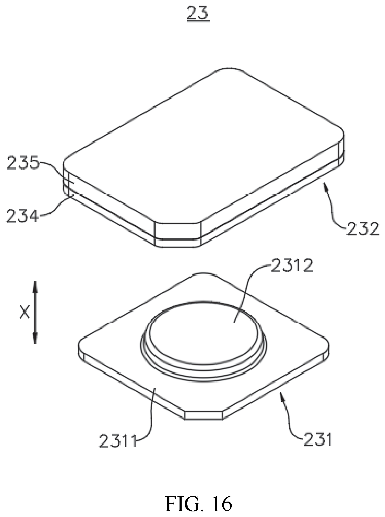

According to some embodiments of the present application, referring to FIG. 15 and FIG. 16, where FIG. 15 is a cross-sectional view of an electrode terminal 23 of a battery cell 20 in other embodiments according to some embodiments of the present application, and FIG. 16 is an exploded structural diagram of an electrode terminal 23 of a battery cell 20 in other embodiments according to some embodiments of the present application, the second terminal portion 232 includes a first material layer 234 and a second material layer 235 that are composited with each other, the first material layer 234 is connected to the first terminal portion 231, and the second material layer 235 is used for connecting to a busbar component. The first material layer 234 is a material different from that of the second material layer 235, the first material layer 234 is made of the same material as the first terminal portion 231, and the second material layer 235 is made of the same material as the busbar component.

The second terminal portion 232 includes the first material layer 234 and the second material layer 235 that are composited with each other, and the first material layer 234 is made of a different material from that of the second material layer 235, that is, the second terminal portion 232 is formed by compositely connecting the first material layer 234 and the second material layer 235 of different materials. Optionally, the first material layer 234 and the second material layer 235 of the second terminal portion 232 can be connected by composite processes such as hot pressing or cold pressing.

The first material layer 234 is connected to the first terminal portion 231, and the first material layer 234 is made of the same material as the first terminal portion 231, which means that in the second terminal portion 232, the first material layer 234 is connected to the first terminal portion 231, and the first material layer 234 is made of the same material as the first terminal portion 231, so that the part of the second terminal portion 232 used for welding to the first terminal portion 231 is made of the same material, which is beneficial to reducing welding difficulty and improving welding quality. Correspondingly, the first terminal portion 231 is made of the same material as the tab 221 of the electrode assembly 22 to facilitate connection of the first terminal portion 231 to the tab 221 of the electrode assembly 22 with the same material.

The second material layer 235 is used for connecting to a busbar component, and the second material layer 235 is made of the same material as the busbar component, which means that in the second terminal portion 232, the second material layer 235 is connected to the busbar component, and the second material layer 235 is made of the same material as the busbar component, so that a part of the second terminal portion 232 used for welding to the busbar component is made of the same material, which is beneficial to reducing welding difficulty and improving welding quality.

It should be noted that the first material layer 234 being made of the same material as the first terminal portion 231 means that the primary components of the first material layer 234 are the same as those of the first terminal portion 231. For example, if the first material layer 234 and the first terminal portion 231 are made of a single material, such as copper or aluminum, the first material layer 234 and the first terminal portion 231 are both composed of the same metal element; and if the first material layer 234 and the first terminal portion 231 are made of an alloy or mixed material, such as aluminum alloy or steel, the first material layer 234 being made of the same material as the first terminal portion 231 means that the first material layer 234 and the first terminal portion 231 have the same primary components, and if the first material layer 234 and the first terminal portion 231 only differ in content of components, they are still regarded as being made of the same material. Similarly, the second material layer 235 being made of the same material as the busbar component means that the primary components of the second material layer 235 are the same as those of the busbar component. For example, if the second material layer 235 and the busbar component are both made of a single material, such as copper or aluminum, the second material layer 235 and the busbar component are both composed of the same metal element; and if the second material layer 235 and the busbar component are made of an alloy or mixed material, such as aluminum alloy or steel, the second material layer 235 being made of the same material as the busbar component means that the second material layer 235 and the busbar component have the same primary components, and if the second material layer 235 and the busbar component only differ in content of components, they are also regarded as being made of the same material.

By configuring the second terminal portion 232 to be composed of the first material layer 234 and the second material layer 235 that are composited with each other, with the first material layer 234 being made of the same material as the first terminal portion 231 and the second material layer 235 made of the same material as the busbar component, the first terminal portion 231 can be connected to the tab 221 of the electrode assembly 22 with the same material, and the second material layer 235 of the second terminal portion 232 can be connected to the busbar component with the same material. Thus, the electrode terminal 23 with this structure can achieve connection between the tab 221 of the electrode assembly 22 and the busbar component that are made of different materials, which is beneficial to improving the overcurrent effect and alleviating the quality problems caused by mutual assembly between components of different materials.

In some embodiments, with continued reference to FIG. 15 and FIG. 16, the first material layer 234 and the second material layer 235 are stacked along the thickness direction X of the wall portion, and the first material layer 234 is located on a side of the second material layer 235 facing the electrode assembly 22.

In the embodiments in which the second terminal portion 232 includes the second limiting portion 2321 and the second protrusion 2322, a connection interface between the first material layer 234 and the second material layer 235 may be in the second limiting portion 2321, or may be in the second protrusion 2322. Certainly, in some embodiments, for the second terminal portion 232, the second limiting portion 2321 may be entirely of the second material layer 235, and correspondingly, the second protrusion 2322 may be entirely of the first material layer 234.

By way of example, in FIG. 15, the connection interface between the first material layer 234 and the second material layer 235 is located within the second limiting portion 2321, which means that the second limiting portion 2321 includes both the first material layer 234 and the second material layer 235.

It should be noted that the first material layer 234 and the second material layer 235 are not limited to the structures stacked along the thickness direction X of the wall portion, and in other embodiments, the second material layer 235 may alternatively be a structure surrounding an outer peripheral side of the first material layer 234.

By arranging the first material layer 234 and the second material layer 235 of the second terminal portion 232 to be stacked along the thickness direction X of the wall portion, with the first material layer 234 on the side of the second material layer 235 facing the electrode assembly 22, the second terminal portion 232 with this structure allows the first material layer 234 to be disposed opposite the first terminal portion 231, facilitating mutual assembly between the first material layer 234 and the first terminal portion 231, and facilitating composite connection between the first material layer 234 and the second material layer 235, which is beneficial to reducing the difficulty of composite connection between the first material layer 234 and the second material layer 235.

According to some embodiments of the present application, as shown in FIG. 3 and FIG. 4, the housing 21 can include a casing 212 and an end cover 213, where the casing 212 has an internal accommodation cavity with an opening 2121, the accommodation cavity is configured to accommodate the electrode assembly 22. The end cover 213 closes the opening 2121, and the end cover 213 is the wall portion 211.

The end cover 213 is the wall portion 211, that is, the electrode terminal 23 is mounted on the end cover 213, and the mounting hole 2111 is provided on the end cover 213.

By configuring the wall portion 211 of the housing 21 as the end cover 213 of the housing 21 for closing the opening 2121 of the casing 212, a battery cell 20 with this structure facilitates assembly of the electrode terminal 23 on the end cover 213 and mutual assembly connection between the electrode terminal 23 and the electrode assembly 22, which is beneficial to reducing the assembly difficulty of the battery cell 20, improving the production efficiency of the battery cell 20.

It should be noted that the structure of the battery cell 20 is not limited thereto. In some embodiments, the battery cell 20 may alternatively be of other structures. For example, the housing 21 can include a casing 212 and an end cover 213, the casing 212 includes a side wall and the wall portion 211 that are integrally formed, the side wall is disposed around the wall portion 211, along the thickness direction X of the wall portion, one end of the side wall is connected to the wall portion 211, the other end encloses to form an opening 2121, and the side wall and the wall portion 211 jointly define an accommodation cavity for accommodating the electrode assembly 22, and the end cover 213 closes the opening 2121. That is, the wall portion 211 is a bottom wall of the casing 212 disposed opposite to the end cover 213 in the thickness direction X of the wall portion, which means that the electrode terminal 23 is mounted on the bottom wall of the casing 212, and the mounting hole 2111 is provided on the bottom wall of the casing 212.

The casing 212 includes the side wall and the wall portion 211 that are integrally formed, which means that the casing 212 is manufactured by an integral forming process, such as stamping, casting, or extrusion molding, that is, the side wall and the wall portion 211 of the casing 212 are an integral structure.

By configuring the wall portion 211 of the housing 21 as a wall of the casing 212 disposed opposite to the end cover 213 in the thickness direction X of the wall portion, a battery cell 20 with this structure can make a region of the housing 21 in which the electrode terminal 23 is mounted away from the end cover 213, and there is no direct connection relationship between the wall portion 211 and the end cover 213, thereby alleviating the phenomenon that force generated when components such as the electrode terminal 23 pull or twist the wall portion 211 acts on the end cover 213, to reduce the risk of connection failure between the end cover 213 and the casing 212, which is thereby beneficial to reducing the risk of liquid leakage of the battery cell 20 during use.

According to some embodiments of the present application, the present application further provides a battery 100, and the battery 100 includes the battery cell 20 of any one of the above solutions.

As shown in FIG. 2, the battery 100 may further include an enclosure 10, and the battery cell 20 is accommodated in the enclosure 10.

In some embodiments, the enclosure 10 can include a first enclosure body 11 and a second enclosure body 12, the first enclosure body 11 and the second enclosure body 12 cover each other, and the first enclosure body 11 and the second enclosure body 12 jointly define assembly space for accommodating the battery cell 20.

Optionally, the second enclosure body 12 may be a hollow structure with one end open, the first enclosure body 11 may be a plate-like structure, and the first enclosure body 11 covers the open side of the second enclosure body 12, so that the first enclosure body 11 and the second enclosure body 12 jointly define the assembly space; and the first enclosure body 11 and the second enclosure body 12 may alternatively both be hollow structures with one side open, and the open side of the first enclosure body 11 covers the open side of the second enclosure body 12.

Certainly, the enclosure 10 formed by the first enclosure body 11 and the second enclosure body 12 may be of various shapes, such as a cylinder or a cuboid. By way of example, in FIG. 2, the enclosure 10 has a cuboid structure.

Optionally, there may be one or more battery cells 20 provided in the enclosure 10. By way of example, in FIG. 2, a plurality of battery cells 20 are provided in the enclosure 10 of the battery 100, and the plurality of battery cells 20 may be connected in series, parallel, or series-parallel, and being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the enclosure 10. Certainly, the battery 100 may be formed by a plurality of battery cells 20 first connected in series, parallel, or series-parallel to form battery modules, and then a plurality of battery modules connected in series, parallel, or series-parallel to form an entirety which is accommodated in the enclosure 10.

The battery 100 may further include other structures. For example, the battery 100 may further include a busbar component, and the busbar component connects a plurality of battery cells 20 to achieve electrical connection between the plurality of battery cells 20.

It should be noted that in some embodiments, the battery 100 may not be provided with the enclosure 10, the battery 100 includes a plurality of battery cells 20, and the battery 100 composed of the plurality of battery cells 20 may be directly assembled to an electric device to provide electrical energy to the electric device through the plurality of battery cells 20. That is, the enclosure 10 may be a part of the electric device. Taking the electric device being a vehicle 1000 as an example, the enclosure 10 may be a part of a chassis structure of the vehicle 1000. For example, a part of the enclosure 10 may become at least a part of the floor of the vehicle 1000, or a part of the enclosure 10 may become at least a part of a crossbeam and a longitudinal beam of the vehicle 1000.

According to some embodiments of the present application, the present application further provides an electric device, the electric device includes the battery cell 20 of any one of the above solutions, and the battery cell 20 is used to provide electrical energy to the electric device.

The electric device may be any of the above-mentioned apparatuses or systems using the battery cell 20.

According to some embodiments of the present application, as shown in FIG. 3 to FIG. 6, the present application provides a battery cell 20. The battery cell 20 includes a housing 21, an electrode assembly 22, an electrode terminal 23, a current collecting member 24, a sealing member 27, a first insulating member 25, and a second insulating member 26. The housing 21 has a wall portion 211, the wall portion 211 is provided with a mounting hole 2111, and the mounting hole 2111 extends through the wall portion 211 along a thickness direction X of the wall portion. The housing 21 includes a casing 212 and an end cover 213, the casing 212 has an internal accommodation cavity with an opening 2121. The end cover 213 closes the opening 2121, and the end cover 213 is the wall portion 211. The electrode assembly 22 is accommodated in the accommodation cavity of the casing 212, and the electrode assembly 22 has a tab 221. The electrode terminal 23 extends through the mounting hole 2111, the electrode terminal 23 includes a first terminal portion 231 and a second terminal portion 232 that are separately provided, and the first terminal portion 231 and the second terminal portion 232 are arranged along the thickness direction X of the wall portion and connected to each other. The first terminal portion 231 includes a first limiting portion 2311 and a first protrusion 2312, along the thickness direction X of the wall portion, the first limiting portion 2311 is located on a side of the wall portion 211 facing the electrode assembly 22, the first protrusion 2312 is protrudingly formed on a side of the first limiting portion 2311 facing away from the electrode assembly 22, and the first protrusion 2312 is disposed in the mounting hole 2111 along the thickness direction X of the wall portion. The second terminal portion 232 includes a second limiting portion 2321 and a second protrusion 2322, along the thickness direction X of the wall portion, the second limiting portion 2321 is located on a side of the wall portion 211 facing away from the electrode assembly 22, at least a part of the wall portion 211 is located between the second limiting portion 2321 and the first limiting portion 2311, the second protrusion 2322 is protrudingly formed on a side of the second limiting portion 2321 facing the electrode assembly 22, and the second protrusion 2322 is connected to the first protrusion 2312. The first limiting portion 2311 and the second limiting portion 2321 are configured to cooperatively clamp the wall portion 211 to restrict the electrode terminal 23 from detaching from the wall portion 211 along the thickness direction X of the wall portion. Along the thickness direction X of the wall portion, a first groove 2313 is formed on a side of the first terminal portion 231 facing the electrode assembly 22, at a position corresponding to the first protrusion 2312. The first protrusion 2312 and the second protrusion 2322 are connected by welding to form a first weld mark 233, and at least a part of the first weld mark 233 is formed on a bottom surface of the first groove 2313. The current collecting member 24 is disposed between the wall portion 211 and the electrode assembly 22, the current collecting member 24 is connected to the first limiting portion 2311 of the first terminal portion 231 and the tab 221 of the electrode assembly 22 to electrically connect the first terminal portion 231 and the electrode assembly 22, and the current collecting member 24 is spaced apart from the first weld mark 233. The current collecting member 24 and the first limiting portion 2311 are connected by welding to form a second weld mark 28. Along the thickness direction X of the wall portion, the first limiting portion 2311 has a first surface 2311a facing the electrode assembly 22, the first groove 2313 is recessed from the first surface 2311a in a direction away from the electrode assembly 22, and the first surface 2311a is connected to the current collecting member 24. The sealing member 27 is disposed between the wall portion 211 and the electrode terminal 23, and at least a part of the sealing member 27 is located within the mounting hole 2111 to seal a gap between the electrode terminal 23 and a wall surface of the mounting hole 2111, along the thickness direction X of the wall portion, the sealing member 27 has an abutting surface 271, the abutting surface 271 abuts against a side of the first limiting portion 2311 facing away from the electrode assembly 22, and a projection of the second weld mark 28 in the thickness direction X of the wall portion does not overlap with the abutting surface 271. Along the thickness direction X of the wall portion, at least a part of the first insulating member 25 is located between the first limiting portion 2311 and the wall portion 211 to insulate and isolate the first limiting portion 2311 from the wall portion 211, and at least a part of the second insulating member 26 is located between the second limiting portion 2321 and the wall portion 211 to insulate and isolate the second limiting portion 2321 from the wall portion 211.

It should be noted that the embodiments in the present application and features in the embodiments can be combined with each other without conflict.

The foregoing embodiments are merely preferred embodiments of the present application and are not intended to limit the present application. For those skilled in the art, the present application can have various modifications and variations. Any modification, equivalent replacements, improvements, and the like made within the spirit and principles of the present application should be included in the protection scope of the present application.

## Claims

1. A battery cell, comprising:
a housing having a wall portion, wherein the wall portion is provided with a mounting hole, and the mounting hole extends through the wall portion along a thickness direction of the wall portion;
an electrode assembly accommodated in the housing; and
an electrode terminal extending through the mounting hole, wherein the electrode terminal comprises a first terminal portion and a second terminal portion that are separately provided, wherein:
the first terminal portion and the second terminal portion are arranged along the thickness direction of the wall portion and connected to each other;
at least a part of the first terminal portion is located on a side of the wall portion facing the electrode assembly and electrically connected to the electrode assembly;
at least a part of the second terminal portion is located on a side of the wall portion facing away from the electrode assembly; and
the first terminal portion and the second terminal portion are configured to cooperatively clamp the wall portion.

2. The battery cell according to claim 1, wherein the first terminal portion comprises:
a first limiting portion, wherein along the thickness direction of the wall portion, the first limiting portion is located on the side of the wall portion facing the electrode assembly, and the first limiting portion is configured to cooperate with the second terminal portion to clamp the wall portion; and
a first protrusion protrudingly formed on a side of the first limiting portion facing away from the electrode assembly, wherein the first protrusion is disposed in the mounting hole along the thickness direction of the wall portion and connected to the second terminal portion.

3. The battery cell according to claim 2, wherein the second terminal portion comprises:
a second limiting portion, wherein along the thickness direction of the wall portion, the second limiting portion is located on the side of the wall portion facing away from the electrode assembly, at least a part of the wall portion is located between the second limiting portion and the first limiting portion, and the second limiting portion is configured to cooperate with the first limiting portion to clamp the wall portion; and
a second protrusion protrudingly formed on a side of the second limiting portion facing the electrode assembly, wherein the second protrusion is connected to the first protrusion.

4. The battery cell according to claim 2 or 3, wherein along the thickness direction of the wall portion, a first groove is formed on a side of the first terminal portion facing the electrode assembly and at a position corresponding to the first protrusion.

5. The battery cell according to claim 4, wherein the first protrusion and the second terminal portion are connected by welding to form a first weld mark, and at least a part of the first weld mark is formed on a bottom surface of the first groove.

6. The battery cell according to claim 5, further comprising a current collecting member disposed between the wall portion and the electrode assembly, wherein the current collecting member is connected to the first terminal portion and the electrode assembly to electrically connect the first terminal portion and the electrode assembly,
wherein the current collecting member is spaced apart from the first weld mark.

7. The battery cell according to claim 6, wherein along the thickness direction of the wall portion, the first limiting portion has a first surface facing the electrode assembly, the first groove is recessed from the first surface in a direction away from the electrode assembly, and the first surface is connected to the current collecting member.

8. The battery cell according to claim 6, wherein along the thickness direction of the wall portion, a first convex portion is protrudingly formed on a side of the current collecting member facing away from the electrode assembly, the first convex portion extending into the first groove and being connected to the bottom surface of the first groove,
wherein a first avoidance groove for providing clearance for the first weld mark is provided at an end of the first convex portion facing the bottom surface of the first groove.

9. The battery cell according to claim 8, wherein along the thickness direction of the wall portion, a groove depth of the first avoidance groove is H₁, satisfying 0.1 mm ≤ H₁ ≤ 0.5 mm.

10. The battery cell according to claim 6, wherein along the thickness direction of the wall portion, a first convex portion is protrudingly formed on a side of the current collecting member facing away from the electrode assembly, the first convex portion extending into the first groove and being connected to the bottom surface of the first groove,
wherein the first weld mark surrounds the outer side of the first convex portion.

11. The battery cell according to any one of claims 8-10, wherein along the thickness direction of the wall portion, a second groove is formed on a side of the current collecting member facing the electrode assembly and at a position corresponding to the first convex portion.

12. The battery cell according to claim 1, wherein the second terminal portion comprises:
a second limiting portion, wherein along the thickness direction of the wall portion, the second limiting portion is located on the side of the wall portion facing away from the electrode assembly, the second limiting portion being configured to cooperate with the first terminal portion to clamp the wall portion; and
a second protrusion protrudingly formed on a side of the second limiting portion facing the electrode assembly, wherein the second protrusion is disposed in the mounting hole along the thickness direction of the wall portion and connected to the first terminal portion.

13. The battery cell according to claim 12, wherein along the thickness direction of the wall portion, the first terminal portion is entirely located on the side of the wall portion facing the electrode assembly.

14. The battery cell according to claim 12 or 13, wherein along the thickness direction of the wall portion, the first terminal portion has a second surface facing away from the electrode assembly, and the second surface is connected to the second protrusion.

15. The battery cell according to claim 14, wherein the second surface is a planar surface and is perpendicular to the thickness direction of the wall portion.

16. The battery cell according to claim 15, wherein the electrode assembly has a tab, and along the thickness direction of the wall portion, the tab is connected to a side of the first terminal portion facing the electrode assembly to electrically connect the electrode assembly and the first terminal portion.

17. The battery cell according to any one of claims 14-16, wherein along the thickness direction of the wall portion, the first terminal portion has a third surface facing the electrode assembly, and the third surface is provided with a third groove,
wherein the second protrusion and the second surface are connected by welding to form a first weld mark, and at least a part of the first weld mark is formed on a bottom surface of the third groove.

18. The battery cell according to claim 17, further comprising a current collecting member disposed between the wall portion and the electrode assembly, wherein the current collecting member is connected to the first terminal portion and the electrode assembly to electrically connect the first terminal portion and the electrode assembly,
wherein along the thickness direction of the wall portion, the current collecting member is connected to the third surface, and the current collecting member is spaced apart from the bottom surface of the third groove.

19. The battery cell according to claim 18, wherein along the thickness direction of the wall portion, a groove depth of the third groove is H₂, satisfying 0.1 mm ≤ H₂ ≤ 0.5 mm.

20. The battery cell according to claim 12 or 13, wherein along the thickness direction of the wall portion, the first terminal portion has a second surface facing away from the electrode assembly, wherein the second surface is provided with a fourth groove, and the second protrusion is fitted into the fourth groove and connected to a bottom surface of the fourth groove.

21. The battery cell according to claim 20, wherein the second protrusion and the bottom surface of the fourth groove are connected by welding to form a first weld mark, and the first weld mark extends to a side of the first terminal portion facing the electrode assembly.

22. The battery cell according to claim 21, further comprising a current collecting member disposed between the wall portion and the electrode assembly, wherein the current collecting member is connected to the first terminal portion and the electrode assembly to electrically connect the first terminal portion and the electrode assembly,
wherein along the thickness direction of the wall portion, the first terminal portion has a third surface facing the electrode assembly, wherein the current collecting member is connected to the third surface, and a second avoidance groove for providing clearance for the first weld mark is provided on a side of the current collecting member facing away from the electrode assembly.

23. The battery cell according to claim 22, wherein a third protrusion is protrudingly formed on the third surface, and the first weld mark extends to an end of the third protrusion facing the electrode assembly,
wherein along the thickness direction of the wall portion, the third protrusion is fitted into the second avoidance groove, and the third protrusion is spaced apart from a bottom surface of the second avoidance groove.

24. The battery cell according to claim 23, wherein along the thickness direction of the wall portion, a distance between the third protrusion and the bottom surface of the second avoidance groove is H₃, satisfying 0.1 mm ≤ H₃ ≤ 0.5 mm.

25. The battery cell according to any one of claims 22-24, wherein along the thickness direction of the wall portion, a second convex portion is formed on a side of the current collecting member facing the electrode assembly and at a position corresponding to the second avoidance groove.

26. The battery cell according to any one of claims 1-25, wherein the first terminal portion and the second terminal portion are connected by welding.

27. The battery cell according to any one of claims 1-26, wherein:
the first terminal portion has a first limiting portion, wherein along the thickness direction of the wall portion, the first limiting portion is located on the side of the wall portion facing the electrode assembly, and the first limiting portion is configured to cooperate with the second terminal portion to clamp the wall portion; and
the battery cell further comprises a current collecting member, wherein the current collecting member is disposed between the wall portion and the electrode assembly, and the current collecting member is connected to the electrode assembly and the first limiting portion to electrically connect the first terminal portion and the electrode assembly.

28. The battery cell according to claim 27, wherein the first terminal portion and the second terminal portion are connected by welding, and the current collecting member is welded to the first limiting portion,
wherein along the thickness direction of the wall portion, a thickness of the first limiting portion is greater than a thickness of a region in which the first terminal portion and the second terminal portion are connected by welding.

29. The battery cell according to claim 27 or 28, wherein:
the current collecting member and the first limiting portion are connected by welding to form a second weld mark; and
the battery cell further comprises a sealing member, wherein the sealing member is disposed between the wall portion and the electrode terminal, at least a part of the sealing member is located within the mounting hole to seal a gap between the electrode terminal and a wall surface of the mounting hole, and along the thickness direction of the wall portion, the sealing member has an abutting surface, wherein the abutting surface abuts against a side of the first limiting portion facing away from the electrode assembly,
wherein a projection of the second weld mark in the thickness direction of the wall portion does not overlap with the abutting surface.

30. The battery cell according to claim 27 or 28, wherein:
the current collecting member and the first limiting portion are connected by welding; and
the battery cell further comprises a sealing member, wherein the sealing member is disposed between the wall portion and the electrode terminal, and at least a part of the sealing member is located within the mounting hole to seal a gap between the electrode terminal and a wall surface of the mounting hole,
wherein along the thickness direction of the wall portion, the sealing member is spaced apart from the first limiting portion.

31. The battery cell according to claim 30, further comprising a first insulating member, wherein:
along the thickness direction of the wall portion, at least a part of the first insulating member is located between the first limiting portion and the wall portion to insulate and isolate the first limiting portion from the wall portion; and
the first insulating member extends between the sealing member and the first limiting portion to separate the sealing member from the first limiting portion.

32. The battery cell according to claim 27 or 28, wherein:
the current collecting member and the first limiting portion are connected by welding to form a second weld mark; and
the battery cell further comprises a sealing member, wherein the sealing member is disposed between the wall portion and the electrode terminal, at least a part of the sealing member is located within the mounting hole to seal a gap between the electrode terminal and a wall surface of the mounting hole, and along the thickness direction of the wall portion, the sealing member abuts against a side of the first limiting portion facing away from the electrode assembly,
wherein along the thickness direction of the wall portion, a distance between the second weld mark and the sealing member is L, satisfying 0.1 mm ≤ L ≤ 1.3 mm.

33. The battery cell according to any one of claims 1-32, wherein along a direction perpendicular to the thickness direction of the wall portion, the first terminal portion and the second terminal portion do not overlap.

34. The battery cell according to any one of claims 1-33, wherein the first terminal portion has a first limiting portion, and the second terminal portion has a second limiting portion,
wherein along the thickness direction of the wall portion, the first limiting portion is located on the side of the wall portion facing the electrode assembly, the second limiting portion is located on the side of the wall portion facing away from the electrode assembly, and the first limiting portion and the second limiting portion are configured to cooperatively clamp the wall portion.

35. The battery cell according to claim 34, further comprising a first insulating member, wherein along the thickness direction of the wall portion, at least a part of the first insulating member is located between the first limiting portion and the wall portion to insulate and isolate the first limiting portion from the wall portion.

36. The battery cell according to claim 34 or 35, further comprising a second insulating member, wherein along the thickness direction of the wall portion, at least a part of the second insulating member is located between the second limiting portion and the wall portion to insulate and isolate the second limiting portion from the wall portion.

37. The battery cell according to claim 36, wherein along the thickness direction of the wall portion, an accommodation groove is provided on a side of the wall portion facing away from the electrode assembly, the mounting hole is provided on a bottom surface of the accommodation groove, and at least a part of the second insulating member is accommodated in the accommodation groove.

38. The battery cell according to any one of claims 1-36, wherein the second terminal portion comprises a first material layer and a second material layer that are composited with each other, wherein the first material layer is connected to the first terminal portion, and the second material layer is used for connecting to a busbar component,
wherein the first material layer is made of a material different from that the second material layer, the first material layer is made of the same material as the first terminal portion, and the second material layer is made of the same material as the busbar component.

39. The battery cell according to claim 38, wherein the first material layer and the second material layer are stacked along the thickness direction of the wall portion, and the first material layer is located on a side of the second material layer facing the electrode assembly.

40. The battery cell according to any one of claims 1-39, wherein the housing comprises:
a casing, having an internal accommodation cavity with an opening, wherein the accommodation cavity is configured to accommodate the electrode assembly; and
an end cover closing the opening,
wherein the end cover is the wall portion.

41. The battery cell according to any one of claims 1-39, wherein the housing comprises:
a casing comprising a side wall and the wall portion that are integrally formed, wherein the side wall is disposed around the wall portion, wherein along the thickness direction of the wall portion, one end of the side wall is connected to the wall portion, the other end encloses to form an opening, and the side wall and the wall portion jointly define an accommodation cavity for accommodating the electrode assembly; and
an end cover closing the opening.

42. A battery comprising the battery cell according to any one of claims 1-41.

43. An electric device comprising the battery cell according to any one of claims 1-41, the battery cell being used to supply electrical energy.
